# EUROPÄISCHE PATENTSCHRIFT

(11) **EP 2 953 872 B1**
(45) Veröffentlichungstag und Bekanntmachung des Hinweises auf die Patenterteilung: **04.03.2020**
(21) Anmeldenummer: 13811482.2
(22) Anmeldetag: 18.12.2013
(51) Int. Cl.: B65G 57/03, B65G 57/24

(54) **VORRICHTUNG UND VERFAHREN ZUM PALETTIEREN VON STAPELN**
APPARATUS AND METHOD FOR PALETTISING STACKS
APPAREIL ET PROCÉDÉ POUR LA PALETTISATION DE PILES

(30) Priorität: 05.02.2013 DE 102013101137
(43) Veröffentlichungstag der Anmeldung: 16.12.2015
(73) Patentinhaber: Windmöller & Hölscher KG, 49525 Lengerich/Westf. (DE)
(72) Erfinder: HAWIGHORST, Thomas, 49205 Hasbergen (DE); GRÄLER, Günter, 49545 Tecklenburg (DE); SCHRÖDTER, Andreas, 49549 Ladbergen (DE)
(86) Internationale Anmeldenummer: PCT/EP2013/077124
(87) Internationale Veröffentlichungsnummer: WO 2014/121875

(56) Entgegenhaltungen:
- EP-A1- 0 146 643
- WO-A1-2010/086292
- DE-A1- 2 312 048
- FR-A1- 2 397 348
- US-A- 5 672 045

## Beschreibung

Die Erfindung betrifft eine Vorrichtung zum Palettieren von Stapeln sowie ein Verfahren zum Palettieren von Stapeln, insbesondere von Säcken, Sackhalbzeugen, Schlauchabschnitten oder flachliegenden Säcken.

Aus dem Stand der Technik ist es bekannt, Paletten mit Hilfe von Palettiervorrichtungen mit Stapeln flacher Gegenstände zu beladen. Zum Beispiel offenbart die EP 0 652 171 B1 eine derartige Vorrichtung. Die zu palettierenden Gegenstände werden mit relativ großer Herstellgeschwindigkeit gefertigt und zu Stapeln zusammengefasst, die anschließend auf Paletten angeordnet werden. Es hat sich nun nachteiligerweise gezeigt, dass die Herstellgeschwindigkeiten derartiger Gegenstände aufgrund neuer Technologien und Optimierungen wesentlich erhöht werden konnten, wobei die gängigen Palettiervorrichtungen in ihrer Palettiergeschwindigkeit an ihre Grenzen stoßen. EP 0 146 643 beschreibt eine Vorrichtung nach dem Oberbegriff des Anspruchs 1 sowie ein Verfahren nach dem Oberbegriff des Anspruchs 15.

Die Aufgabe der vorliegenden Erfindung ist es die genannten Nachteile zu vermeiden, insbesondere eine Vorrichtung zum Palettieren von Stapeln sowie ein Verfahren zum Palettieren von Stapeln zu schaffen, so dass eine Leistungssteigerung bzgl. der Palettiergeschwindigkeit erreicht werden kann. Die Aufgabe der vorliegenden Erfindung wird durch sämtliche Merkmale des Patentanspruches 1 sowie des unabhängigen Verfahrensanspruches 15 gelöst. In den abhängigen Patentansprüchen sind mögliche Ausgestaltungen der Erfindung beschrieben.

Erfindungsgemäß ist eine Vorrichtung mit den Merkmalen des Anspruchs 1 zum Palettieren von Stapeln vorgesehen, insbesondere von Säcken, Sackhalbzeugen, Schlauchabschnitten oder flachliegenden Säcken, wobei die Vorrichtung einen Palettierbereich, der für ein Beladen zumindest einer Palette mit Stapeln vorgesehen ist, eine Ladevorrichtung, mit der Stapel in den Palettierbereich bringbar sind, einen Stapelzuführbereich für die Zuführung von Stapeln in die Ladevorrichtung und einen Stapelabführbereich für den Abtransport der mit Stapeln beladenen Palette aufweist. Zudem umfasst die Erfindung mindestens zwei Aufnahmevorrichtungen, um im Palettierbereich mit Stapeln beladen zu werden, wobei mindestens eine Aufnahmevorrichtung unabhängig von der anderen Aufnahmevorrichtung in Richtung Stapelabführbereich bewegbar sind. Ein wesentlicher Kern der Erfindung ist, dass eine Aufnahmevorrichtung im Palettierbereich mit Stapeln beladen werden kann, wobei gleichzeitig ein Palettenwechsel in der erfindungsgemäßen Vorrichtung durchführbar ist, bei dem eine mit Stapeln beladene Palette in Richtung Stapelabführbereich transportiert wird und somit diese Palette aus der erfindungsgemäßen Palettiervorrichtung gebracht wird. Somit lässt sich eine Leistungssteigerung bei der Palettierung erzielen, da mit einer hohen Geschwindigkeit Stapel in die Ladevorrichtung zugeführt werden können und über die Ladevorrichtung in den Palettierbereich kontinuierlich gebracht werden können. Folglich kann die Beladungsgeschwindigkeit im Palettierbereich relativ hoch gehalten werden, da stets eine Aufnahmevorrichtung im Palettierbereich sich befindet und die zweite Aufnahmevorrichtung in Richtung Stapelabführbereich oder bereits wieder zurück in Richtung Ladevorrichtung sich bewegt.

Erfindungsgemäß ist vorgesehen, dass die Ladevorrichtung mindestens eine Auflagefläche aufweist, auf der eine Vielzahl an Stapeln positionierbar ist, wobei die Auflagefläche zwischen einer geschlossenen Position und einer geöffneten Position verfahrbar ist, wobei die geschlossene Position für die Zuführung der Stapel in die Ladevorrichtung vorgesehen ist und die geöffnete Position für das Beladen des Palettierbereiches mit Stapeln in einem Stapelverbund vorgesehen ist. Vorteilhafterweise ist vorgesehen, dass die Stapel versetzt zueinander auf der Auflagefläche positioniert werden, wobei insbesondere die Stapel zumindest teilweise übereinander liegen. Somit kann gewährleistet werden, dass ein Stapelverbund bei der Positionierung auf die Auflagefläche entsteht, der in sich eine stabile, nicht leicht verschiebbare Einheit darstellt.

Zum Beispiel ist es denkbar, dass die Auflagefläche translatorisch bewegbar ist, so dass sich eine geschlossene Position und eine geöffnete Position der Auflagefläche ergibt. Hierbei ist die Auflagefläche derart bewegbar in der erfindungsgemäßen Palettiervorrichtung gelagert, dass bei der Bewegung aus der geschlossenen Position in die geöffnete Position nicht die Gefahr besteht, dass der auf der Auflagefläche sich befindende Stapelverbund sich verschiebt und/oder kippt. Vorteilhafterweise besteht zwischen der Auflagefläche und dem Stapelverbund und/oder den Stapeln während der Bewegung der Auflagefläche keine Relativgeschwindigkeit, so dass keine Kräfte und/oder Beschleunigungen bei der Bewegung der Auflagefläche auf den Stapelverbund übertragbar sind. In der geöffneten Position verlässt der Stapelverbund den Kontakt mit der Auflagefläche, wobei der Stapelverbund in den Palettierbereich fällt und/oder rutscht und somit die im Palettierbereich sich befindende Palette mit den Stapeln beladen wird. Gleichzeitig verfährt die Palette innerhalb des Palettierbereichs in Richtung Stapelabführbereich, so dass in einem nächsten Schritt die Ladevorrichtung den Palettierbereich mit einer nächsten Palettencharge beladen kann.

Des Weiteren kann es vorgesehen sein, dass die Aufnahmevorrichtungen derart bewegbar angeordnet sind, dass gleichzeitig ein Abtransport der Stapel, die auf einer ersten Aufnahmevorrichtung sich befinden, durch den Stapelabführbereich und ein Beladen der zweiten Aufnahmevorrichtung mit Stapeln durchführbar ist, wobei insbesondere beide Aufnahmevorrichtungen jeweils mit einer Stapelfläche ausgebildet sind, auf der die Stapel positionierbar sind. Hierbei ist es denkbar, dass zumindest eine Aufnahmevorrichtung translatorisch und/oder rotatorisch und/oder schwenkbar in den Palettierbereich und/oder aus den Palettierbereich bewegbar ist.

Vorteilhaftweise kann die erste Aufnahmevorrichtung eine Stapelfläche aufweisen, zur Zwischenspeicherung von Stapeln, die von der Auflagefläche in Richtung Stapelfläche zuführbar sind, wobei insbesondere die Stapelfläche derart ausgeführt ist, dass diese zwischen einer geschlossenen und einer geöffneten Position verfahrbar ist. Die zweite Aufnahmevorrichtung befindet sich unterhalb der Stapelfläche der ersten Aufnahmevorrichtung und ist in der Lage die Stapel, die auf der Palette sich befinden, in Richtung Stapelabführbereich zu transportieren. Anschließend kann die zweite Aufnahmevorrichtung sich wieder der Ladevorrichtung und/oder der ersten Aufnahmevorrichtung nähern. In der Zwischenzeit können Stapel auf der Stapelfläche der ersten Aufnahmevorrichtung gelegt werden, welches durch die Ladevorrichtung erfolgt. Die Stapelfläche kann gemäß dieser Erfindung auch als Palettenaufnahmefläche bezeichnet werden.

Zudem umfasst die erfindungsgemäße Vorrichtung, dass an den Aufnahmevorrichtungen Antriebsmittel derart wirken, dass die Aufnahmevorrichtungen translatorisch und/oder rotatorisch bewegbar sind und/oder schwenkbar sind, insbesondere dass zumindest eine Aufnahmevorrichtung vertikal in Richtung Ladevorrichtung und/oder zur entgegengesetzten Richtung bezogen auf die Ladevorrichtung bewegbar ist. Beispielsweise ist es denkbar, dass zumindest eine Aufnahmevorrichtung in horizontale Richtung in den Palettierbereich und/oder aus den Palettierbereich bewegbar ist. Beispielsweise kann die erfindungsgemäße Vorrichtung lediglich eine Aufnahmevorrichtung aufweisen, die für den Abtransport der mit Stapeln beladenen Palette in Richtung Stapelabführbereich zuständig ist, wobei die Stapelfläche dieser Aufnahmevorrichtung sowohl in Richtung Ladevorrichtung als auch in Richtung Stapelabführbereich bewegbar innerhalb der erfindungsgemäßen Vorrichtung gelagert ist. Das bedeutet, dass die Stapelfläche eine Hubbewegung ausführen kann. Je nach Position der Aufnahmevorrichtung kann die zweite Aufnahmevorrichtung sich in einer Art Warteposition befinden, wenn die Stapelfläche der betreffenden Aufnahmevorrichtung mit Stapeln beladen wird. Während des Abtransportes bzw. der Bewegung der ersten Aufnahmevorrichtung in Richtung Stapelabführbereich kann eine Steuerung in der Vorrichtung vorgesehen sein, die die zweite Aufnahmevorrichtung veranlasst, in den Palettierbereich sich zu bewegen, insbesondere sich translatorisch und/oder rotatorisch und/oder schwenkbar in den Palettierbereich sich zu bewegen, damit der Beladevorgang über die Ladevorrichtung weiter ausgeführt werden kann. Somit wird während dieses Palettenwechsels sichergestellt, dass der Beladevorgang weiter ausgeführt werden kann. Ist die erste Aufnahmevorrichtung "entleert", fährt diese wieder zurück in Richtung Ladevorrichtung und nimmt die dort zumindest teilweise mit Stapeln beladene Palette, die auf der dort angeordneten zweiten Aufnahmevorrichtung steht, auf. Zum Beispiel kann die erfindungsgemäße Vorrichtung derart ausgebildet sein, dass außerhalb des Palettierbereiches eine Aufnahmevorrichtung eine Leerpalette erfassen kann, wobei anschließend die Aufnahmevorrichtung mit der Leerpalette in den Palettierbereich sich zurückbewegt, um von der Ladevorrichtung mit Stapeln beladen zu werden. In der Zwischenzeit bewegt sich die zweite Aufnahmevorrichtung, die bereits mit Stapeln beladen ist, in Richtung Stapelabführbereich.

Zudem umfasst die Erfindung, dass die Aufnahmevorrichtung eine Rollenanordnung aufweist, auf der die Palette stellbar ist, wobei die Rollenanordnung zum Transport und/oder zur Bewegung der Palette dient, wobei insbesondere ein Antrieb vorgesehen ist, der mit der Rollenanordnung in Wirkverbindung steht, um die Rollen der Rollenanordnung in Rotation zu setzen. Über die Rollenanordnung wird bewirkt, dass ein zuverlässiger Wegtransport der bereits beladenen Palette in den Stapelabführbereich realisierbar ist. An einer geeigneten Stelle weist des Weiteren die erfindungsgemäße Palettiervorrichtung einen Palettenzuführbereich auf, durch den "leere" Paletten der Aufnahmevorrichtung zugeführt werden können. Auch hier begünstigt der Rollenantrieb ein zuverlässiges Zuführen der unbeladenen Palette in den Palettierbereich.

Es ist denkbar, dass zwei Aufnahmevorrichtungen vorgesehen sind, an denen jeweils eine Rollenvorrichtung angeordnet ist. Beispielsweise kann es erfindungsgemäß vorgesehen sein, dass die Rollenanordnung fest auf der Ebene zum Stapelabführbereich angeordnet ist, so dass die Stapelfläche relativ zur Rollenanordnung bewegbar ist, oder mindestens eine Aufnahmevorrichtung weist die Rollenanordnung auf, die mit der Stapelfläche bewegbar ist. Das bedeutet, dass eine Aufnahmevorrichtung eine Rollenanordnung aufweisen kann, die in ihrer vertikalen Position nicht bewegbar ist, sondern sich auf der Ebene zum Stapelabführbereich befindet, wobei die der Aufnahmevorrichtung zugehörige Stapelfläche sich relativ zur Rollenanordnung bewegen kann, insbesondere eine Hubbewegung in Richtung Ladevorrichtung sowie in Richtung Rollenanordnung ausführen kann. Alternativ und/oder zusätzlich ist es denkbar, dass die weitere, zweite Aufnahmevorrichtung eine Rollenanordnung aufweisen kann, die sich mit ihrer Stapelfläche mitbewegen kann.

Vorteilhafterweise kann die Aufnahmevorrichtung derart ausgestaltet sein, dass die Stapelfläche in die Rollenanordnung eintauchbar ist. Hierbei ist es denkbar, dass die Rollen zueinander beabstandet sind, wobei die Stapelfläche rechenartig oder gabelartig ausgebildet ist, so dass diese zwischen den Rollen einfahrbar ist. Somit wird eine kompakte Aufnahmevorrichtung erzielt.

Des Weiteren kann es sinnvoll sein, dass zwei Stapelflächen vorgesehen sind, die rechenartig ausgebildet sind, wobei insbesondere beide Stapelflächen ineinander fahren können, ohne dass es zu einer Kollision kommt. Die rechenartige oder gabelartige Ausbildung begünstigt konstruktiv, dass ein nicht unerheblicher Beladungszustand an Stapeln aufgenommen werden kann. Vorteilhafterweise ist die Stapelfläche aus einem Metall ausgebildet.

Erfindungsgemäß kann außerhalb des Palettierbereiches eine Leerpalettenaufnahme vorgesehen sein, in der Leerpaletten stapelbar sind, wobei eine Leerpalettenzuführung auf der Ebene des Stapelabführbereiches oder auf der Ebene des Palettierbereiches erfolgt. Ebenfalls ist es denkbar, dass die Zuführung der Palette zwischen den beiden genannten Zuführbereichen erfolgt. Zudem kann die Erfindung mit umfassen, dass die Aufnahmevorrichtung derart steuerbar ist, dass diese eine Leerpalette außerhalb des Palettierbereiches aufnimmt und in den Palettierbereich befördert. Zum Beispiel ist es denkbar, dass die Aufnahmevorrichtung die oberste Leerpalette aus der Leerpalettenaufnahme aufnimmt und diese anschließend in den Palettierbereich befördert, wobei parallel die weitere Aufnahmevorrichtung die bereits mit Stapeln beladene Palette in Richtung Stapelabführbereich bewegt, damit die beladene Palette aus der Palettiervorrichtung wegtransportiert werden kann.

Erfindungsgemäß kann die Auflagefläche Ausrichtungselemente aufweisen, um im Palettierbereich die Stapel auszurichten, insbesondere dass die Ausrichtungselemente an der Unterseite, die dem Palettierbereich zugewandt ist, der Auflagefläche angeordnet sind. Beispielsweise kann die erfindungsgemäße Vorrichtung derart ausgebildet sein, dass bei einer Bewegung der Auflagefläche der Ladevorrichtung von der geöffneten Position in die geschlossene Position die Ausrichtungselemente die Stapel auf der Palette kontaktieren und somit in die gewünschte Ausrichtung bringen. Bei den Ausrichtungselementen kann es sich zum Beispiel um vorsprungartige, in den Palettierbereich ragende Wandelemente handeln, die insbesondere aus Metall und/oder Blech ausgeführt sein können. Zum Beispiel kann vorgesehen sein, dass die Ausrichtungselemente einen Raum begrenzen, in den die Aufnahmevorrichtung einfahrbar ist. Die Ausrichtungselemente können in einer weiteren Ausgestaltungsform der Erfindung bewegbar an der Auflagefläche angeordnet sein. Zum Beispiel ist es denkbar, dass die Ausrichtungselemente um eine Achse verschwenkbar sind. Befinden sich die Ausrichtungselemente in einer Arbeitsstellung, dient dieses zur Ausrichtung der Stapel. Nach der Ausrichtung können die Ausrichtungselemente in eine Ruhestellung verfahren werden.

Da der Raum durch die Ausrichtungselemente begrenzt ist, der unterhalb der Auflagefläche der Ladevorrichtung liegt, kann es in einer möglichen Ausführungsform der Erfindung sinnvoll sein, dass die Aufnahmevorrichtung, insbesondere die Stapelfläche der Aufnahmevorrichtung der Geometrie des Raumes angepasst ist. Des Weiteren kann es von Vorteil sein, dass die Form der Aufnahmevorrichtung, insbesondere der Stapelfläche derart angepasst ist, dass die Stapelfläche einen zufriedenstellenden Zugang in den durch die Ausrichtungselemente begrenzten Raum erhält.

Die erfindungsgemäße Vorrichtung kann eine Elektronik aufweisen, die ein Heranfahren und/oder Kontaktieren der Aufnahmevorrichtung an eine Palette, insbesondere im Palettierbereich und/oder außerhalb des Palettierbereiches steuert und/oder regelt. Hierbei kann die Erfindung derart weiterentwickelt sein, dass die Elektronik eine Sensorik aufweist, um innerhalb des Palettierbereiches die Unterseite der Palette zu erkennen. Ferner kann es vorgesehen sein, dass die Elektronik eine Sensorik aufweist, um innerhalb des Palettierbereiches die Stapelhöhe zu erkennen, die durch die Stapel bestimmt ist, die auf der Palette liegen. Zudem kann die Erfindung derart weiterentwickelt sein, dass die Elektronik eine Sensorik aufweist, um innerhalb des Palettierbereiches den Abstand zwischen der Unterseite der Auflagefläche und der Palette zu erkennen, oder außerhalb des Palettierbereiches die Höhe des Leerpalettenstapels zu erkennen. Die Erkennung der Unterseite der Palette ist für die Aufnahmevorrichtung vorteilhaft, die sich in Richtung Palette in einer Hubbewegung bewegt, um die Palette, die zumindest teilweise durch die Ladevorrichtung mit Stapeln beladen ist, aufzunehmen. Die sich in Richtung Palette bewegende Aufnahmevorrichtung erhält die Information durch die Elektronik, wann eine Kontaktierung der Palette vorliegt, so dass die Hubbewegung gestoppt werden kann. Zudem ist es vorteilhaft, dass die Elektronik Informationen über die Stapelhöhe innerhalb des Palettierbereiches erhält, damit unter anderem eine zuverlässige Beladung durch die Ladevorrichtung gewährleistet ist. Damit die Aufnahmevorrichtung, insbesondere die Stapelfläche der Aufnahmevorrichtung nahe genug zu Ladevorrichtung verfahren wird, ist es vorteilhaft, dass die Elektronik innerhalb des Palettierbereiches den Abstand zwischen der Unterseite der Auflagefläche der Ladevorrichtung und der Palette erkennt. Damit die Leerpaletten, die außerhalb des Palettierbereiches sich befinden, zuverlässig durch eine der beiden Aufnahmevorrichtungen aufgenommen werden können, ist es vorteilhaft, dass die Elektronik die Höhe des Leerpalettenstapels erkennt. Vorteilhafterweise erfasst die Aufnahmevorrichtung die oberste Palette des Leerpalettenstapels und verfährt diesen in den Palettierbereich.

Zudem kann es vorteilhaft sein, dass eine Elektronik vorgesehen ist, die dafür sorgt, dass die Höhe des Leerpalettenstapels überwacht und/oder konstant gehalten wird. Dieses hat unter anderem den Vorteil, dass die Bestückung der Aufnahmevorrichtung mit einer Leerpalette optimiert werden kann. Ebenfalls kann die Erfindung eine Sensorik umfassen, die die Höhe der einzelnen Palette erfasst.

Die Sensorik kann berührungslos messende Sensoren und/oder berührend messende Sensoren umfassen. Zum Beispiel ist es denkbar, dass visuell messende Sensoren, insbesondere optische Sensoren zum Einsatz kommen oder Näherungssensoren, die akustisch, induktiv oder kapazitiv arbeiten. Ebenfalls schließt die Erfindung mit ein, taktile Sensoren und/oder Kraft-/Momentensensoren einzusetzen. Zudem kann es erfindungsgemäß vorgesehen sein, dass die Elektronik eine Eingabevorrichtung aufweist, in der Betriebsparameter, insbesondere die die Geometrie der Palette definieren, eingebbar sind. Die Bewegung der Aufnahmevorrichtung kann unter anderem durch die Betriebsparameter und/oder durch die ermittelten Werte der Sensorik beeinflusst werden. Ferner kann erfindungswesentlich sein, dass die Rollenanordnung aus dem Palettierbereich bewegbar ist. Diese Ausführungsform kann dann vorteilhaft sein, wenn beide Aufnahmevorrichtungen mit jeweils einer Rollenanordnung ausgeführt sind.

Zweckmäßigerweise kann zumindest eine Aufnahmevorrichtung eine Fixierungseinheit für die Stapel und/oder den Stapelverbund aufweisen. Beispielsweise kann die erfindungsgemäße Palettiervorrichtung derart ausgebildet sein, dass die Fixierungseinheit zumindest teilweise zwischen den Rollen eintauchbar ist. Während der Bewegung der Stapelfläche der Aufnahmevorrichtung einschließlich der mit Stapeln beladenen Palette bezweckt die Fixierungseinheit, dass der Stapelverbund zuverlässig auf der Aufnahmevorrichtung verbleibt und insbesondere nicht zu der einen oder anderen Seite verrutscht, da auf den Stapelverbund höhere Beschleunigungen wirken können.

Vorteilhafterweise kann die Ladevorrichtung zumindest ein Greiferelement aufweisen, um einen Stapel auf die Auflagefläche zu legen, wenn die Auflagefläche sich in der geschlossenen Position befindet, insbesondere dass die Ladevorrichtung ein Verfahrsystem aufweist, an dem das Greiferelement bewegbar ist. Die Greiferelemente entnehmen vorzugsweise dem Stapelzuführbereich einzelne Stapel und legen diese gemäß eines definierten Musters auf die Auflagefläche der Ladevorrichtung. Es können auch eine Vielzahl von Greifelementen vorgesehen sein, die der Beladung der Auflagefläche dienen. Die Greifelemente können z. B. je nach Anforderungsprofil die Stapel in ihrer horizontalen Lage drehen und somit horizontal auf der Auflagefläche ausrichten. Zudem ist es denkbar, dass die Greifelemente die Stapel wenden und/oder anschließend entsprechend horizontal ausrichten, um diese anschließend auf die Auflagefläche zu legen.

Ebenfalls ist es denkbar, dass die Aufnahmevorrichtung eine Ausrichtungseinheit für die Palette aufweist, wobei insbesondere die Ausrichtungseinheit zumindest teilweise zwischen den Rollen eintauchbar ist. Hierbei kann die Ausrichtungseinheit vor dem Palettieren von Stapeln auf der Palette die Palette zunächst auf der Aufnahmevorrichtung ausrichten und somit in die gewünschte Position bringen. Beispielsweise kann die Ausrichtungseinheit Kontaktelemente aufweisen, die direkt an der Palette angreifen, um diese in die definierte Position zu verschieben. Ebenfalls ist es denkbar, dass während der Beladung der Palette mit Stapeln die Kontaktelemente an der Palette verbleiben, um die Palette beim Beladungsvorgang in der korrekten Position auf der Aufnahmevorrichtung zu halten. Auch während des Verfahrens und der Bewegung der Aufnahmevorrichtung, insbesondere in Richtung Stapelabführbereich und/oder in Richtung Stapelzuführbereich können die Kontaktelemente an der Palette verbleiben, damit die Palette zuverlässig ihre Position hält. Ebenfalls ist es denkbar, dass die genannte Ausrichtungseinheit mit der Fixierungseinheit kombinierbar ist.

Des Weiteren wird die oben genannte Aufgabe durch ein Verfahren mit den Merkmalen des Anspruchs 15 zum Palettieren von Stapeln, insbesondere von Säcken, Sackhalbzeugen, Schlauchabschnitten oder flachliegenden Gegenständen, wie Säcken gelöst, mit einem Palettierbereich, in dem die Stapel auf eine Palette beladen werden, einer Ladevorrichtung, die die Stapel in den Palettierbereich einbringt, einem Stapelabführbereich, durch den die mit Stapeln beladene Palette abtransportiert wird, sowie mit einem Palettierbereich, in dem die Stapel auf eine Palette beladen werden, einer Ladevorrichtung, die die Stapel in den Palettierbereich einbringt, einem Stapelabführbereich, durch den die mit Stapeln beladene Palette abtransportiert wird, und mindestens zwei Aufnahmevorrichtungen, die unabhängig voneinander mit Stapeln beladen werden, wobei mindestens eine Aufnahmevorrichtung unabhängig von der anderen Aufnahmevorrichtung in Richtung Stapelabführbereich bewegt wird, so dass in einem Verfahrenschritt ein Palettenwechsel durchgeführt wird und gleichzeitig im Palettierbereich ein Palletieren einer Palette ausgeführt wird. Hierdurch kann eine kompakte Palettiervorrichtung geschaffen werden, bei der es möglich ist, gleichzeitig einen Palettenwegtransport und einen Beladevorgang mit Stapeln auf eine Palette durchzuführen. Um Wiederholungen zu vermeiden entsprechen die weiteren Vorteile der erfindungsgemäßen Palettiervorrichtung den Vorteilen des erfindungsgemäßen Verfahrens. Ferner ist es denkbar, dass die Aufnahmevorrichtungen jeweils eine Stapelfläche aufweisen, auf der im Palettierbereich Stapel gestapelt werden, wobei insbesondere die Aufnahmevorrichtungen während ihrer Bewegung voneinander ausweichen. Die Ladevorrichtung weist mindestens eine Auflagefläche auf, auf der eine Vielzahl an Stapel positioniert werden. Erfindungsgemäß ist die Auflagefläche zwischen einer geschlossenen Position und einer geöffneten Position verfahrbar, wobei in der geschlossenen Position die Stapel auf die Auflagefläche gesetzt werden und nach dem Eintritt der geöffneten Position die Stapel im Stapelverbund in den Palettierbereich auf die Palette fallen.

Des Weiteren kann es vorteilhaft sein, dass die Aufnahmevorrichtung in Richtung Ladevorrichtung oder zur entgegengesetzten Richtung bezogen auf die Ladevorrichtung bewegt wird, so dass die vertikale Position der Aufnahmevorrichtung veränderbar ist, wobei in einer unteren vertikalen Position der Aufnahmevorrichtung die mit Stapeln beladene Palette in Richtung Stapelabführbereich abtransportiert wird. Hierbei kann es zweckmäßig sein, dass zumindest eine Aufnahmevorrichtung in den Palettierbereich und/oder aus den Palettierbereich translatorisch bewegt und/oder rotatorisch bewegt und/oder verschwenkt wird.

Zudem kann es vorteilhaft sein, dass die erste Aufnahmevorrichtung eine Stapelfläche aufweist, der Stapel von der Auflagefläche zur Zwischenspeicherung von Stapeln zugeführt werden, wobei insbesondere die Stapelfläche derart ausgeführt sind, dass diese zwischen einer geschlossenen und einer geöffneten Position verfahren. Zudem schließt die Erfindung mit ein, dass während der Zwischenspeicherung eine zweite Aufnahmevorrichtung in Richtung Stapelabführbereich verfährt und/oder in Richtung erste Aufnahmevorrichtung verfährt. Beispielsweise ist es denkbar, dass die Funktionsweise der sich zwischen den beiden genannten Positionen bewegbaren Stapelfläche der Funktionsweise der Auflagefläche der Ladevorrichtung entspricht. Die Stapelfläche der ersten Aufnahmevorrichtung ist entsprechend beabstandet zur Auflagefläche der Ladevorrichtung angeordnet, wobei vorteilhafterweise in geöffneter Position der Auflagefläche der Ladevorrichtung die Stapelfläche der ersten Aufnahmevorrichtung sich in ihrer geschlossenen Position befindet. Während des Beladevorgangs der ersten Aufnahmevorrichtung mit Stapeln ist es denkbar, dass die erste Aufnahmevorrichtung ihre vertikale Position unverändert beibehält. Alternativ ist es denkbar, dass die erste Aufnahmevorrichtung die vertikale Position ihrer Stapelfläche entsprechend des Beladezustandes verändern kann, das bedeutet, dass die Stapelfläche zumindest teilweise sich in Richtung Stapelabführbereich translatorisch nach unten bewegen kann. Befindet sich die zweite Aufnahmevorrichtung unterhalb der ersten Aufnahmevorrichtung, kann die Stapelfläche der ersten Aufnahmevorrichtung geöffnet werden, so dass der Stapelverbund auf die Stapelfläche der zweiten Aufnahmevorrichtung gelangt. Die zweite Aufnahmevorrichtung kann anschließend durch die Ladevorrichtung weiter mit Stapeln beladen werden, wobei die Stapelfläche der ersten Aufnahmevorrichtung sich in ihrer geöffneten Position befindet. Nach der Beladung der zweiten Aufnahmevorrichtung, erfolgt der Wegtransport der mit Stapeln beladenen Palette, wobei die zweite Aufnahmevorrichtung translatorisch in Richtung Stapelabführbereich verfährt. In der unteren vertikalen Position kann über eine Rollenanordnung die Palette abtransportiert werden. In der Zwischenzeit kann eine Zwischenspeicherung von Stapeln in der ersten Aufnahmevorrichtung durchgeführt werden.

Damit ein zuverlässiger Beladungszyklus sichergestellt ist, kann es vorteilhaft sein, dass die Ladevorrichtung in definierten Zeitabständen die im Palettierbereich sich befindende Palette jeweils mit mindestens einer Ebene an Stapeln belädt, wobei mit jedem Beladungsvorgang die Aufnahmevorrichtung, die die zu beladene Palette trägt, die vertikale Position verändert.

Erfindungsgemäß kann es vorteilhaft sein, dass während der Bewegung von der geöffneten Position in die geschlossene Position der Auflagefläche eine Ausrichtung der Stapel im Palettierbereich erfolgt. Hierdurch wird während des Beladevorgangs stets sichergestellt, dass die einzelnen Stapel auf der Palette korrekt aufliegen.

Eine die Erfindung verbessernde Maßnahme kann vorsehen, dass die Aufnahmevorrichtung eine Palette von einer Leerpalettenaufnahme, die außerhalb des Palettierbereiches sich befindet, aufnimmt und in den Palettierbereich befördert. Vorteilhafterweise nimmt die Aufnahmevorrichtung die oberste Palette des Leerpalettenstapels aus der Leerpalettenaufnahme auf. Die Aufnahmevorrichtung kann unterschiedliche Verfahrwege außerhalb des Palettierbereiches aufweisen, um die Leerpalette aufzunehmen. Zum Beispiel kann es vorgesehen sein, dass die Aufnahmevorrichtung mit ihrer Stapelfläche translatorisch soweit nach außen verfahren wird, dass sie über eine lineare Bewegung in die Palette einfahren kann und somit die Leerpalette tragend in den Palettierbereich befördern kann. Alternativ kann die Aufnahmevorrichtung auch derart ausgestaltet sein, dass die Stapelfläche über Greifelemente verfügt, die beispielsweise seitlich die Leerpalette aufnehmen, wobei im nächsten Schritt die Leerpalette in den Palettierbereich verfahren wird. Bei der letztgenannten Ausführungsform ist der Verfahrweg für die Aufnahmevorrichtung zur Aufnahme einer Leerpalette geringer, so dass eine kompakte Palettiervorrichtung geschaffen werden kann.

Vorteilhafterweise kann eine erste Aufnahmevorrichtung eine Vollbewegung ausüben, bei der die Stapelfläche von einer oberen vertikalen Position, die der Ladevorrichtung zugewandt ist, in eine untere vertikale Position verfährt, in der die Stapel in Richtung Stapelabführbereich transportiert werden, wobei die zweite Aufnahmevorrichtung in der oberen vertikalen Position verbleibt und/oder lediglich eine Teilhubbewegung im Bereich der oberen vertikalen Position ausübt. In einer möglichen Ausführungsform der Erfindung kann in einer oberen vertikalen Lage der Aufnahmevorrichtung die Stapelfläche mit Stapeln beladen werden. Vorteilhafterweise kann eine Aufnahmevorrichtung in einer oberen vertikalen Lage sich befinden, in der die auf der Aufnahmevorrichtung sich befindende Palette durch die Ladevorrichtung beladen wird und die andere Aufnahmevorrichtung in einer unteren vertikalen Lage sich befindet, wobei die sich auf dieser anderen Aufnahmevorrichtung befindende Palette abtransportiert wird.

Des Weiteren kann vorgesehen sein, dass während des Palettenwechsels die Ladevorrichtung auf die Auflagefläche Stapel legt und bei einer vollständigen Belegung der Auflagefläche mit Stapeln die Auflagefläche aus der geschlossenen Position in die geöffnete Position verfährt, so dass eine Beladung der Palette, die auf der Aufnahmevorrichtung steht, ausgeführt wird. Ebenfalls ist es denkbar, dass die Aufnahmevorrichtung, die für den Palettenwechsel in einer unteren vertikalen Position ist, zum Palettierbereich bewegt wird, um die Aufnahmevorrichtung mit der zumindest teilweise beladenen Palette aufzunehmen.

Des Weiteren umfasst die Erfindung, dass die Ladevorrichtung in definierten Zeitabständen die im Palettierbereich sich befindende Palette mit Stapeln belädt, wobei mit jedem Beladungsvorgang die Aufnahmevorrichtung die vertikale Position verändert, insbesondere die Aufnahmevorrichtung sich in Richtung Stapelabführbereich bewegt. Hierbei ist es denkbar, dass die Stapel versetzt zueinander und/oder zumindest teilweise übereinander auf der Auflagefläche zu einem Stapelverbund positioniert werden. Somit wird ein Stapelverbund erzeugt, der zuverlässig seine Form auch bei hohen Transportgeschwindigkeiten beibehält.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele im Einzelnen beschrieben sind. Es zeigen:
- Figur 1: eine schematische Darstellung einer erfindungsgemäßen Palettiervorrichtung,
- Figur 2: die Palettiervorrichtung gemäß Figur 1 in einem weiteren Verfahrensschritt,
- Figur 3: eine Draufsicht auf eine Auflagefläche einer Ladevorrichtung, die in Figur 1 zum Einsatz kommen kann,
- Figur 4: die Auflagefläche gemäß Figur 3 in einer Seitenansicht,
- Figur 5: die Auflagefläche gemäß Figur 4 in einer weiteren Verfahrposition,
- Figur 6: eine schematische Draufsicht auf einen unteren Bereich der Palettiervorrichtung, wobei zwei Hubtische im Einsatz sind,
- Figur 7: eine schematische Ansicht zweier Aufnahmevorrichtungen, die bewegbar im Palettierbereich der Palettiervorrichtung angeordnet sind,
- Figur 8: eine mögliche Ausführungsform einer Aufnahmevorrichtung, die innerhalb des Hubtisches versenkbar ist,
- Figur 9: eine weitere Palettiervorrichtung in schematischer Darstellung,
- Figur 10: eine weitere Ausführungsform einer auf einen Stapel wirkenden Fixierungseinheit,
- Figur 11: ein weiteres Ausführungsbeispiel eines Teilbereiches in einer Palettiervorrichtung und
- Figur 12: eine weitere Ausführungsform einer an der Palette wirkenden Ausrichtungseinheit.

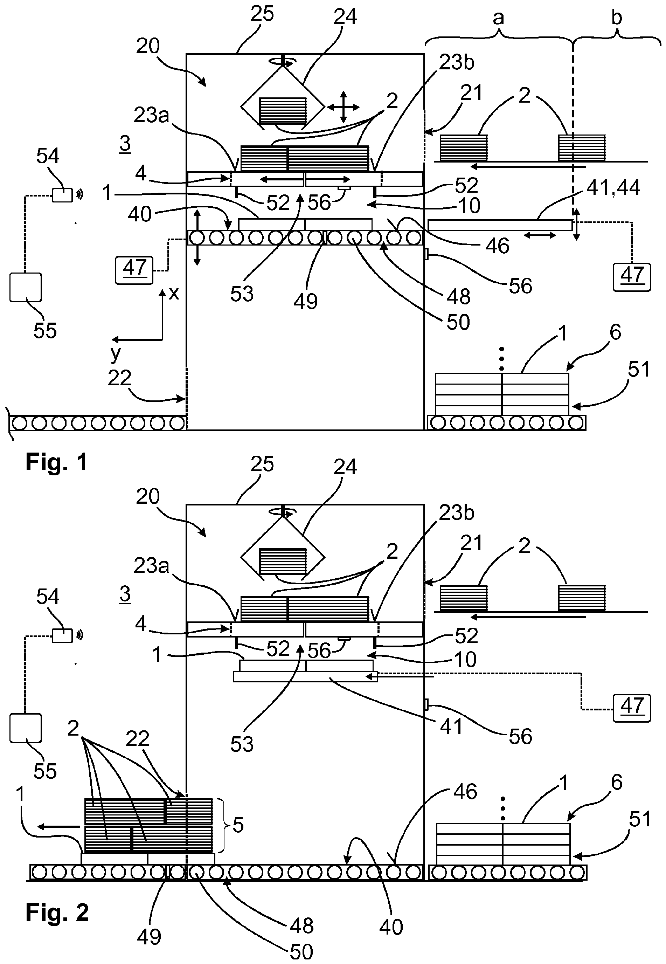

Figur 1 und Figur 2 zeigen eine Vorrichtung zum Palettieren von Stapeln 2, die beispielsweise Säcke, Sackhalbzeuge, Schlauchabschnitte, flachliegende Gegenstände wie Säcke sein können. Die Palettiervorrichtung weist eine Ladevorrichtung 20 auf, die im vorliegenden Ausführungsbeispiel zwei Auflageflächen 23a, 23b aufweist, auf der eine Vielzahl an Stapeln 2 positionierbar ist. Die Stapel 2 werden über ein Transportsystem einem Stapelzuführbereich 21 zugeführt, wobei ein Greifelement 24 vorgesehen ist, um die Stapel 2 zu greifen und entsprechend einer definierten Position und definierten Anforderungen auf die Auflagefläche 23a, 23b zu legen. Die Auflagefläche 23a, 23b ist zwischen einer geschlossenen Position 3, die in Figur 1 und Figur 2 gezeigt ist, und einer geöffneten Position 4 verfahrbar, wobei die geöffnete Position 4 in gestrichelter Darstellung gezeigt ist. In der geschlossenen Position 3 ist die Zuführung der Stapel 2 über das Greifelement 24 denkbar. Ist eine gewünschte Ebene oder Ebenen an Stapeln 2 auf der Auflagefläche 23a, 23b erreicht, erfolgt eine Bewegung der Auflagefläche 23a, 23b in die geöffnete Position 4, wodurch der Stapelverbund 5 in den darunterliegenden Palettierbereich 10 gelangt und durch eine Palette 1 aufgenommen wird. Gemäß Figur 1 befindet sich auf der Palette 1 noch kein Stapel 2. Die Palette 1 befindet sich auf einer Aufnahmevorrichtung 40, die über Antriebsmittel 47 translatorisch in Richtung Ladevorrichtung 20 - also nach oben - und in entgegengesetzter Richtung - nach unten - bewegt werden kann. Hierbei weist die Aufnahmevorrichtung 40 eine Stapelfläche 46 auf, auf der die Palette 1 aufliegt.

Das Greifelement 24 ist über ein Verfahrsystem 25 horizontal und vertikal bewegbar, wobei gleichzeitig auch das Verfahrsystem 25 einen derartigen Antrieb aufweisen kann, dass eine Bewegung des Greifelementes 24 rotatorisch denkbar ist, welches gemäß der Pfeile in Figur 1 gezeigt ist, um einen Stapel 2 innerhalb des Greifelementes 24 zu wenden und anschließend auf der Auflagefläche 23a abzusetzen.

Die Palettiervorrichtung weist des Weiteren einen Stapelabführbereich 22 auf, der im unteren Bereich der Palettiervorrichtung sich befindet, um die mit Stapeln 2 beladene Palette 1 abzutransportieren Die Aufnahmevorrichtung 40 kann unterschiedliche Ausführungsformen aufweisen, worauf im Folgenden noch eingegangen wird. Zudem ist eine zweite Aufnahmevorrichtung 41 gezeigt, die sich in einer Parkposition außerhalb des Palettierbereiches 10 befindet, welches in Figur 1 gezeigt ist.

Der Beladungsvorgang des Palettierbereiches 10 kann derart ausgeführt sein, dass beispielsweise mehrere Ebenen an Stapeln 2 in den Palettierbereich 10 gebracht werden, wobei stets die Auflageflächen 23a, 23b mehrfach zwischen der geschlossenen Position 3 und der geöffneten Position 4 wechseln. Gleichzeitig verfährt die Aufnahmevorrichtung 40 einen definierten Weg nach unten, um zuverlässig jede neue Ebene von oben durch die Ladevorrichtung 20 zuverlässig aufzunehmen. Nachdem der gewünschte Stapelverbund 5 im Palettierbereich 10 erreicht ist, verfährt die Aufnahmevorrichtung 40 translatorisch in Richtung Stapelabführbereich 22. Hat die Aufnahmevorrichtung 40 gemäß Figur 2 die untere vertikale Position erreicht, erfolgt ein Wegtransport des Stapelverbundes 5 durch den Stapelabführbereich 22. Die Aufnahmevorrichtung 40 weist eine Rollenanordnung 48 mit einzelnen Rollen 50 auf, die über einen Antrieb 49 in Rotation bringbar sind, so dass eine zuverlässige translatorische Bewegung des Stapelverbundes 5 in y-Richtung ausführbar ist. Während also nun durch die Aufnahmevorrichtung 40 die mit Stapeln 2 beladene Palette 1 in Richtung Stapelabführbereich 22 transportiert werden, verfährt die zweite Aufnahmevorrichtung 41 in den Palettierbereich 10, wobei gleichzeitig ein Beladen der auf der Aufnahmevorrichtung 41 sich befindenden Palette 1 möglich ist. Die Ladevorrichtung 20 bestückt während des Abtransportes des Stapelverbundes 5 weiter die Auflagefläche 23a, 23b. Auch wenn die Aufnahmevorrichtung 40 mit ihrer Stapelfläche 46 sich noch nicht unter der zweiten Aufnahmevorrichtung 41 befindet, da beispielsweise der Abtransport noch nicht beendet ist, kann die Aufnahmevorrichtung 41 mit einer oder mehreren Ebenen an Stapeln 2 bereits beladen werden. Es ist denkbar, dass die zweite Aufnahmevorrichtung 41 sowohl translatorisch in y-Richtung als auch in -x-Richtung beispielsweise über einen Antrieb bewegt werden kann.

Die leere Stapelfläche 46 der Aufnahmevorrichtung 40 verfährt anschließend in Richtung Ladevorrichtung 20. Im Palettierbereich 10 an der Aufnahmevorrichtung 41 angekommen, kann die Stapelfläche 46 der Aufnahmevorrichtung 40 zuverlässig die zumindest teilweise bereits mit Stapeln 2 beladene Palette 1 aufnehmen, wobei der Beladungsprozess durch die Ladevorrichtung 20 weiter erfolgt.

Gemäß Figur 1 ist des Weiteren gezeigt, dass eine Palettenstation 6 vorgesehen ist, die leere Paletten 1 aufweist, die die Aufnahmevorrichtung 40, 41 zuvor aufnimmt, bevor diese sich in den Palettierbereich 10 bewegen. Die Bestückung der Aufnahmevorrichtung 40, 41 mit "leeren" Paletten 1 kann über einen Antrieb erfolgen.

Beispielsweise ist es denkbar, dass die Aufnahmevorrichtung 41 komplett aus dem Bereich a) herausfährt und in den Bereich b) gelangt, um zuverlässig eine leere Palette 1, die in der Leerpalettenaufnahme 51 gestapelt ist, aufzunehmen. Hierfür verfährt die Aufnahmevorrichtung 41 einen translatorischen Hubweg, um zuverlässig die oberste Palette 1 vom Leerpalettenstapel aufzunehmen. Alternativ ist es denkbar, dass die Aufnahmevorrichtung 41 lediglich in den Bereich a) verfährt und über Greifelemente verfügt, die dafür sorgen, zuverlässig eine Leerpalette 1 zu greifen, wobei anschließend die Aufnahmevorrichtung 41 mit der Leerpalette 1 zurück in den Palettierbereich 10 verfahren kann.

Der Antrieb der Aufnahmevorrichtungen 40, 41 kann über Zahnriemen oder Kettenelemente, über pneumatische Antriebe erfolgen, welches explizit nicht dargestellt ist.

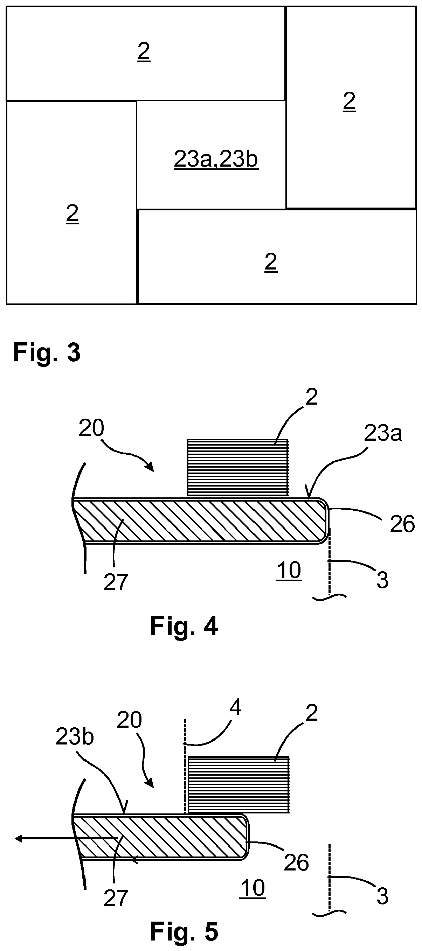

In Figur 3 ist exemplarisch gezeigt, dass auf der Auflagefläche 23a, 23b die einzelnen Stapel 2 unterschiedlichst positionierbar sind, wobei das Greifelement 24 die Stapel 2 rotatorisch entsprechend an der Auflagefläche 23a, 23b positionieren kann. Ebenfalls ist es denkbar, dass sich zumindest teilweise die Stapel 2 überlappen können, bzw. teilweise die Stapel 2 aufeinander liegen können, wodurch ein zuverlässig stehender Stapelverbund 5 entsteht, so dass während des Transportvorganges der Stapelverbund 5 nicht kippt. Ein weiterer Vorteil ist, dass die einzelnen Elemente innerhalb des Stapels 2 nahezu waagerecht bzw. horizontal stapelbar sind, so dass ein optimierter Stapelaufbau entsteht, so dass beispielsweise es zu keinen Durchbiegungen oder unerwünschten Erhöhungen innerhalb des Stapelverbundes 5 kommt. Letztes könnte beispielsweise Schädigungen im Stapelbereich nach sich ziehen.

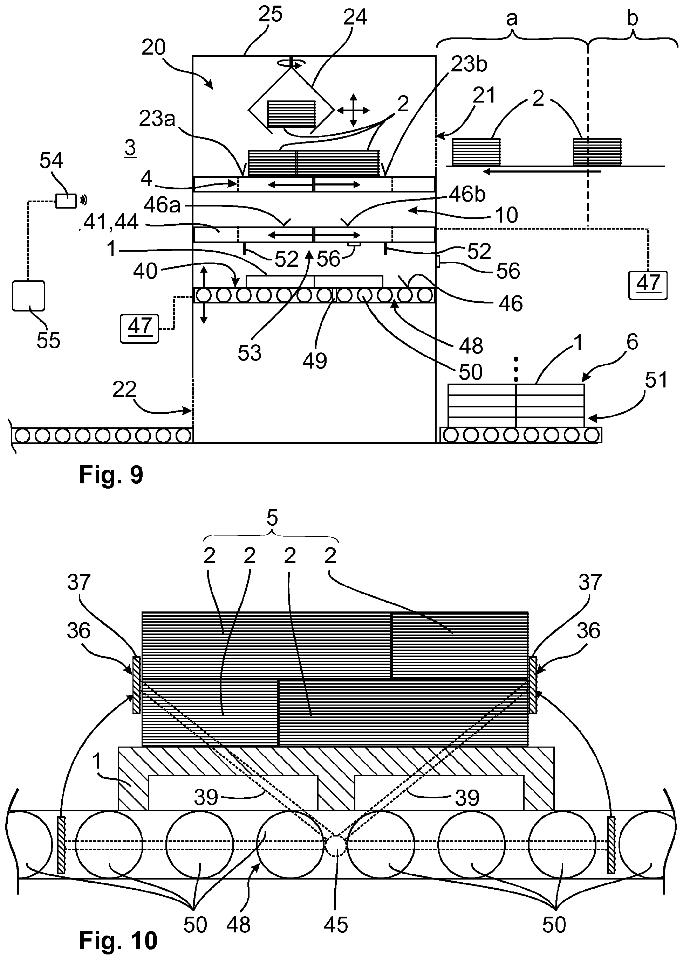

Gemäß Figur 4 und Figur 5 ist exemplarisch gezeigt, wie beispielsweise eine der Auflageflächen 23a sich zwischen einer geschlossenen Position 3, die in Figur 4 gezeigt ist, und einer geöffneten Position 4, die fast in Figur 5 erreicht ist, bewegt. Die Auflagefläche 23a, 23b weist eine flexible Außenschicht 26 auf, die ein bewegbares Basisteil 27 umfasst. Dieses Basisteil 27 wird bei der Bewegung zwischen den Positionen 3 und 4 angetrieben. Gleichzeitig bewegt sich die Außenschicht 26 mit, wobei keine Relativgeschwindigkeit zwischen dem Stapel 2 und der Außenschicht 26 vorliegt. Somit wird erreicht, dass zuverlässig der Stapel 2 in den Palettierbereich 10 nach unten fällt. Gemäß Figur 9 kann die erfindungsgemäße Palettiervorrichtung mit einer Aufnahmevorrichtung 40 ausgeführt sein, die der Funktionsweise entspricht, die die soeben beschriebenen Auflageflächen 23a, 23b aufweisen. Gemäß Figur 9 erfolgt die Beladung über die Auflageflächen 23a, 23b, wobei die Aufnahmevorrichtung 40 zwei verschiebbare Stapelflächen 46a, 46b aufweist, die ebenfalls zwischen einer geschlossenen Position 3 und einer geöffneten Position 4 bewegbar sind, wobei der Mechanismus dem aus Figur 4 und Figur 5 entspricht. Unterhalb der Aufnahmevorrichtung 40 bewegt sich die weitere Aufnahmevorrichtung 41 und ist für den Abtransport der mit Stapeln 2 beladenen Palette 1 verantwortlich. Die Aufnahmevorrichtung 40 kann bereits durch die Ladevorrichtung 20 mit Stapeln 2 beladen werden, wobei gleichzeitig die Aufnahmevorrichtung 41 ihre Hubbewegung in Richtung Stapelabführbereich 22 oder wieder zurück zur Aufnahmevorrichtung 40 durchführt. Ist die Aufnahmevorrichtung 41 an der Aufnahmevorrichtung 40 innerhalb des Palettierbereiches 10 angekommen, kann die Stapelfläche 46a, 46b der Aufnahmevorrichtung 40 geöffnet werden, wobei die bereits auf der Stapelfläche 46a, 46b der Aufnahmevorrichtung 40 zwischengespeicherten Stapel 2 auf die Palette 1 fallen, die auf die Stapelfläche 46 der Aufnahmevorrichtung 41 fallen.

Die Aufnahmevorrichtung 41 gemäß Figur 1 und Figur 2 sowie die Aufnahmevorrichtung 40 gemäß Figur 9 kann bezüglich der vertikalen Position in der erfindungsgemäßen Palettiervorrichtung fest angeordnet sein. Ebenfalls ist es denkbar, dass die genannten Aufnahmevorrichtungen zumindest teilweise einen Hubweg in x-Richtung bzw. in entgegengesetzter x-Richtung durchführen können. Dieses kann insbesondere dann Sinn machen, wenn die Stapelhöhe beim Beladen des Palettierbereiches 10 auf der Palette 1 anwächst und die darunter verfahrende Aufnahmevorrichtung noch nicht die Palette 1 übernommen hat, um diese in Richtung Stapelabführbereich 22 zu bewegen.

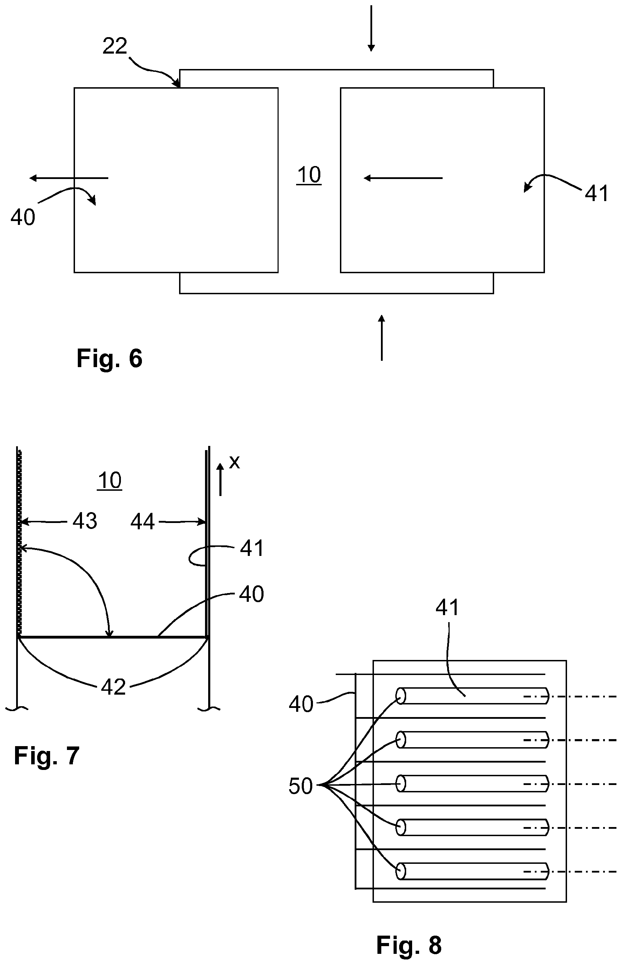

In einer weiteren Alternative zu Figur 1 und Figur 2 ist es denkbar, dass Aufnahmevorrichtungen 40,41 vorgesehen sind, die jeweils eine Stapelfläche 46 mit einer Rollenanordnung 48 aufweisen. Beide Aufnahmevorrichtungen 40,41 können mit den gleichen technischen Merkmalen ausgestattet sein, wie in Figur 1 und Figur 2. Das bedeutet, dass während eine Aufnahmevorrichtung 40 eine bereits beladene Palette 1 wegtransportiert, die zweite Aufnahmevorrichtung 41 sich an der Ladevorrichtung 20 befindet, um mit Stapeln 2 beladen zu werden. Die Aufnahmevorrichtungen 40,41 können beispielsweise, wie in Figur 6 gezeigt, seitlich in den Palettierbereich 10 verfahren werden. Ebenfalls ist es denkbar, dass eine der beiden Aufnahmevorrichtungen 40,41 von oben oder von unten - siehe Pfeildarstellung gemäß Figur 6 - in den Palettierbereich 10 verfahren. Eine Palettenzuführung erfolgt im vorliegenden Beispiel vorteilhafterweise auf der Höhe des Stapelabführbereiches 22, wobei es jedoch ebenfalls denkbar ist, dass in einer entsprechenden Hubhöhe nahe der Ladevorrichtung 20 eine Leerpalette auf eine der beiden Aufnahmevorrichtungen 40,41 gebracht wird. Beide Aufnahmevorrichtungen 40,41 sind in Richtung Ladevorrichtung 20 bewegbar, um dort beladen zu werden.

Gemäß Figur 7 ist exemplarisch gezeigt, dass die Stapelflächen 46 der Aufnahmevorrichtungen 40, 41 beispielsweise in den Palettierbereich 10 oder aus dem Palettierbereich 10 translatorisch und/oder rotatorisch und/oder verschwenkt werden können. Gemäß Figur 7 ist gezeigt, dass die Aufnahmevorrichtung 40 um die Achse 42 verschwenkt werden kann, um aus einer Parkposition 43 in den Palettierbereich 10 um die Achse 42 verschwenkt zu werden. Während sich die Aufnahmevorrichtung 40 im Palettierbereich 10 befindet, verbleibt die Aufnahmevorrichtung 41 in ihrer Parkposition 44. Ebenfalls ist es denkbar, welches sich ebenfalls auf die Ausführungsbeispiele gemäß Figur 1 bis Figur 6 bezieht, dass die Aufnahmevorrichtungen 40, 41 translatorisch in x-Richtung oder in -x-Richtung bewegt werden können.

Gemäß Figur 8 ist dargestellt, dass die Stapelflächen 46der Aufnahmevorrichtung 40 und/oder der Aufnahmevorrichtung 41 rechenartig ausgebildet sein können, so dass diese zwischen den Rollen 34 der Rollenanordnung 33 gemäß Figur 1 eintauchen können. Eine Stapelfläche 46 kann im Palettierbereich 10 eine Palette 1 tragen, wobei gleichzeitig der Beladevorgang der Palette 1 stattfindet. Während des Beladevorgangs kann sich die unterhalb befindende Aufnahmevorrichtung 41 der Palette 1 nähern, wobei die Stapelfläche 46 der unteren Aufnahmevorrichtung 41 nach einem definierten Hubweg die Unterseite der Palette 1 kontaktiert. Anschließend verfährt die oberhalb sich befindende Aufnahmevorrichtung 40 mit ihrer Stapelfläche 46 aus dem Palettierbereich 10, um beispielsweise außerhalb des Palettierbereiches 10 eine neue Leerpalette 1 aufzunehmen. Der Vorteil einer rechenartigen Ausbildung der Stapelflächen 46 ist, dass diese geometrische Ausgestaltung besonders geeignet ist, in eine Palette 1 gemäß Figur 10 hineinzufahren bzw. sich von dieser Palette 1 wieder zu lösen. Die Rollen 34 sind derart zueinander beabstandet, dass ohne weiteres eine oder beide Aufnahmevorrichtungen 40, 41 zwischen den Rollen 34 eintauchen können.

Gemäß Figur 8 ist es beispielsweise denkbar, dass die obere Aufnahmevorrichtung 40 mit ihrer rechenartigen Stapelfläche 46 eine Palette mit Stapeln trägt. Von unten nähert sich die zweite Aufnahmevorrichtung 41 mit der integrierten Rollenanordnung 48. Hat die Aufnahmevorrichtung 41 einen entsprechenden Hubweg durchgeführt, tauchen die Stapelfläche 46 der oberen Aufnahmevorrichtung 40 in die Zwischenräume der Rollenanordnung 48 ein, wobei die Palette in Kontakt mit der Rollenanordnung 48 der unteren Aufnahmevorrichtung 41 kommt. Anschließend kann die rechenartige Stapelfläche 46 der ersten Aufnahmevorrichtung 40 translatorisch aus der Aufnahmevorrichtung 41 wegbewegt werden.

Gemäß Figur 10 ist in einem weiteren Ausführungsbeispiel gezeigt, dass Aufnahmevorrichtung 40,41 eine Fixierungseinheit 36 aufweisen kann, um die Stapel 2 oder den Stapelverbund 5 zuverlässig zu fixieren. Gemäß Figur 10 ist gezeigt, dass die Fixierungseinheit 36 seitlich am Stapelverbund 5 direkt angreifen kann. Die Fixierungseinheit 36 taucht im nichtaktiven Zustand in der Rollenanordnung 33 ein bzw. befindet sich zwischen den Rollen 34 oder in der Rollenanordnung 33. Hierdurch kann effektiv Raum eingespart werden, wodurch die Gesamtanordnung kompakt gehalten werden kann. Wenn nun eine Fixierung während des Transportes notwendig ist, fahren die Fixierungselemente 37 aus, bzw. schwenken aus, so dass bei der Fixierung diese Fixierungselemente 37 den Stapelverbund 5 kontaktieren. Die Fixierungseinheit 36 kann um eine Achse 45 drehbar gelagert sein, die in der Rollenanordnung 33 sich befindet. Die Fixierungselemente 37 sind an einem Arm 39 der Fixierungseinheit 36 angeordnet, der um die Achse 45 schwenkbar ist.

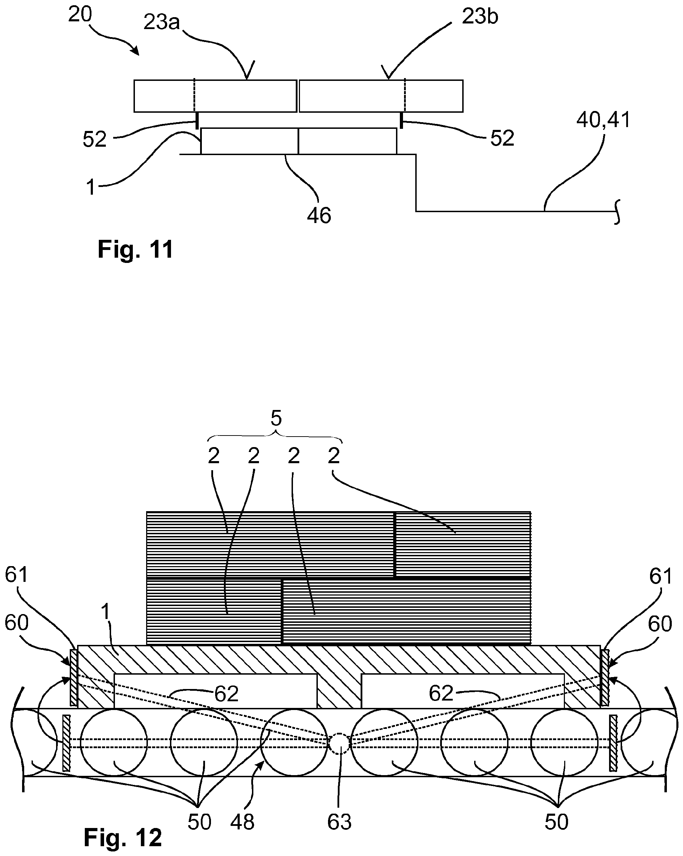

In Figur 12 ist eine Ausrichtungseinheit 60 an der Aufnahmevorrichtung 40, 41 angeordnet, um die Palette 1 auf der Aufnahmevorrichtung 40,41 entsprechend auszurichten, bevor der eigentliche Beladevorgang der Palette 1 mit Stapeln im Palettierbereich 10 startet. Die Ausrichtungseinheit 60 weist Kontaktelemente 61 auf, die bei der Ausrichtung direkt auf der Palette 1 wirken. Die Ausrichtungseinheit 60 weist im dargestellten Ausführungsbeispiel um eine Achse 63 verschwenkbare Arme 62 auf, an deren Enden das jeweilige Kontaktelemente 61 angeordnet ist. Die Kontaktelemente 61 sind relativ zur Aufnahmevorrichtung 40,41 derart bewegbar, dass die Palette 1 in ihre gewünschte Position verfahren werden kann. Auch während des Beladevorgangs der Palette 1 mit Stapeln können die Kontaktelemente 61 an der Palette 1 anliegen und somit die Palette 1 in ihrer Position fixieren. Des Weiteren ist es denkbar, dass während der Hubbewegung der Aufnahmevorrichtung 40,41 diese Kontaktelemente 61 an der Palette 1 wirken, um die Palette 1 in ihrer Position zu fixieren. Ist die Aufnahmevorrichtung 40,41 im Stapelabführbereich 22 angekommen, werden die Kontaktelemente 61 der Ausrichtungseinheit 60 gelöst und verfahren zwischen die Rollen 50 der Rollenanordnung 48. Daraufhin können die Rollen 50 angetrieben werden, um die Palette 1 mit dem Stapelverbund 5 in Richtung Stapelabführbereich 22 zu bewegen. Die Fixierungseinheit 36 gemäß Figur 10 ist mit der Ausrichtungseinheit 60 gemäß Figur 12 kombinierbar. Die Arme 39,62 beider Einheiten 36,60 können auch alternativ teleskopartig verschwenkbar sein. Ebenfalls ist es denkbar, dass das Kontaktelement 61 sowie das Fixierungselement 37 andersartig über einen Antrieb relativ zur Aufnahmevorrichtung 40,41 bewegbar sind, um am Stapelverbund 5 und/oder an der Palette 1 entsprechend zu wirken.

Gemäß Figur 1 und Figur 2 weist die Auflagefläche 23a, 23b Ausrichtungselemente 52 auf, um im Palettierbereich 10 die Stapel 2 auszurichten. Die Ausrichtungselemente 52 begrenzen einen Raum 53, in dem zumindest eine der beiden Aufnahmevorrichtung 40,41 einfahrbar ist. Gemäß Figur 11 ist gezeigt, dass die Stapelfläche 46 einen treppenartigen Verlauf aufweist, bzw. stufenartig ausgebildet ist. Nachdem die Stapelfläche 46 mit der Leerpalette 1 bestückt worden ist, verfährt die Stapelfläche 46 in Richtung der Ladevorrichtung 20, wobei die Palette 1 in den Raum 53 geführt wird. Dieses ist in Figur 11 schematisch gezeigt. Anschließend kann der Beladungsvorgang durch die Ladevorrichtung 20 ausgeführt werden, wobei die Ausrichtungselemente 52 dafür sorgen, dass die Stapel 2, die auf die Palette 1 gebracht werden, entsprechend ausgerichtet werden. Während der Bewegung von der geöffneten Position 4 in die geschlossene Position 3 der Auflageflächen 23a, 23b kontaktieren die Ausrichtungselemente 52 die Randbereiche der Stapel 2, wodurch eine Ausrichtung erfolgt. Die Ausrichtungselemente 52 können starr an der Unterseite der Auflagefläche 23a, 23b angeordnet sein. Ebenfalls ist es denkbar, dass die Ausrichtungselemente 52 schwenkbar an der Auflagefläche 23a, 23b gelagert sind, wobei die Ausrichtungselemente 52 zwischen einer Ruhestellung und einer Arbeitsstellung, in denen die Ausrichtungselemente 52 in Figur 1 und Figur 2 sich befinden, bewegt werden können. In der Ruhestellung, die nicht explizit gezeigt ist, ist eine Ausrichtung der Stapel 2 nicht möglich.

Zudem kann eine Elektronik 54 gemäß Figur 1 und Figur 2 vorgesehen sein, die ein Heranfahren und eine Kontaktierung der Aufnahmevorrichtung 40, 41 an eine Palette, sowohl im Palettierbereich 10 als auch außerhalb des Palettierbereiches 10 steuert und/oder regelt. Zum Beispiel ist eine Sensorik 56 denkbar, die innerhalb des Palettierbereiches 10 die Unterseite der Palette 1 erkennt. Ebenfalls kann eine Sensorik 56 ihre Verwendung finden, die innerhalb des Palettierbereiches 10 die Stapelhöhe erkennt, die durch die Stapel 2 bestimmt ist, die auf der Palette 1 liegen. Zudem ist es denkbar, dass die Sensorik 56 innerhalb des Palettierbereiches 10 den Abstand zwischen der Unterseite der Auflagefläche 23a, 23b und der Palette 1 erkennt. Ebenfalls kann eine Sensorik 56 vorgesehen sein, die außerhalb des Palettierbereiches 10 die Höhe des Leerpalettenstapels 6 erkennt.

### Bezugszeichenliste

- 1: Palette
- 2: Stapel
- 3: geschlossene Position
- 4: geöffnete Position
- 5: Stapelverbund
- 6: Palettenstation

- 10: Palettierbereich

- 20: Ladevorrichtung
- 21: Stapelzuführbereich
- 22: Stapelabführbereich
- 23a: Auflagefläche
- 23b: Auflagefläche
- 24: Greiferelement
- 25: Verfahrsystem
- 26: Außenschicht
- 27: Basisteil

- 36: Fixierungseinheit
- 37: Fixierungselement

- 40: Aufnahmevorrichtung
- 41: Aufnahmevorrichtung
- 42: Achse
- 43: Parkposition
- 44: Parkposition
- 45: Achse
- 46: Stapelfläche
- 46a, 46b: Stapelfläche
- 47: Antriebsmittel
- 48: Rollenanordnung
- 49: Antrieb

- 50: Rollen
- 51: Leerpalettenaufnahme
- 52: Ausrichtungselement
- 53: Raum
- 54: Elektronik
- 55: Eingabevorrichtung
- 56: Sensorik

- 60: Ausrichtungseinheit
- 61: Kontaktelement
- 62: Arm
- 63: Achse

## Patentansprüche

1. Vorrichtung zum Palettieren von Stapeln (2), insbesondere von Säcken, Sackhalbzeugen, Schlauchabschnitten oder flachliegenden Säcken, welche folgende Merkmale umfasst:
einen Palettierbereich (10), der für ein Beladen zumindest einer Palette (1) mit Stapeln (2) vorgesehen ist,
mindestens eine Ladevorrichtung (20), mit der Stapel (2) in den Palettierbereich (10) bringbar sind,
mindestens ein Stapelzuführbereich (21) für die Zuführung von Stapeln (2) in die Ladevorrichtung (20),
mindestens einen Stapelabführbereich (22) für den Abtransport der mit Stapeln (2) beladenen Palette (1),
mindestens zwei Aufnahmevorrichtungen (40,41), um im Palettierbereich (10) mit Stapeln (2) beladen zu werden, wobei mindestens eine Aufnahmevorrichtung (40,41) unabhängig von der anderen Aufnahmevorrichtung (40,41) in Richtung Stapelabführbereich (22) bewegbar ist, wobei an den Aufnahmevorrichtungen (40,41) Antriebsmittel (47) derart wirken, dass die Aufnahmevorrichtungen (40,41) translatorisch und/oder rotatorisch bewegbar sind und/oder schwenkbar sind, **dadurch gekennzeichnet, dass** die Ladevorrichtung 20 mindestens eine Auflagefläche (23a,23b) aufweist, auf der eine Vielzahl an Stapeln (2) positionierbar ist, wobei die Auflagefläche (23a,23b) zwischen einer geschlossenen Position (3) und einer geöffneten Position (4) verfahrbar ist, wobei die geschlossene Position (3) für die Zuführung der Stapel (2) in die Ladevorrichtung (20) vorgesehen ist und die geöffnete Position (4) für das Beladen des Palefttierbereiches (10) mit Stapeln (2) in einem Stapelverbund (5) vorgesehen ist.

2. Vorrichtung nach Anspruch 1,
**dadurch gekennzeichnet,**
**dass** die Aufnahmevorrichtungen (40,41) derart bewegbar angeordnet sind, dass gleichzeitig ein Abtransport der Stapel (2), die auf einer ersten Aufnahmevorrichtung (40,41) sich befinden, durch den Stapelabführbereich (22) und ein Beladen der zweiten Aufnahmevorrichtung (40,41) mit Stapeln (2) durchführbar ist, wobei insbesondere beide Aufnahmevorrichtungen (40,41) jeweils mit einer Stapelfläche (46) ausgebildet sind, auf der die Stapel (2) positionierbar sind.

3. Vorrichtung nach einem der Ansprüche 1 oder 2,
**dadurch gekennzeichnet,**
**dass** die erste Aufnahmevorrichtung (40) eine Stapelfläche (46a,46b) aufweist, zur Zwischenspeicherung von Stapeln (2), die von der Auflagefläche (23a,23b) in Richtung Stapelfläche (46a,46b) zuführbar sind, wobei insbesondere die Stapelfläche (46a,46b) derart ausgeführt sind, dass diese zwischen einer geschlossenen (3) und einer geöffneten Position (4) verfahrbar ist.

4. Vorrichtung nach einem der vorhergehenden Ansprüche,
**dadurch gekennzeichnet,**
**dass** zumindest eine Aufnahmevorrichtung (40,41) vertikal in Richtung Ladevorrichtung (20) und/oder zur entgegengesetzten Richtung bezogen auf die Ladevorrichtung (20) bewegbar ist und/oder dass zumindest eine Aufnahmevorrichtung (40,41) in horizontale Richtung in den Palettierbereich (10) und/oder aus den Palettierbereich (10) bewegbar ist.

5. Vorrichtung nach einem der vorhergehenden Ansprüche,
**dadurch gekennzeichnet,**
**dass** mindestens eine Aufnahmevorrichtung (40,41) eine Rollenanordnung (48) aufweisen, auf der die Palette (1) stellbar ist, wobei die Rollenanordnung (48) zum Transport und/oder zur Bewegung der Palette (1) dient, wobei insbesondere ein Antrieb (49) vorgesehen ist, der mit der Rollenanordnung (48) in Wirkverbindung steht, um die Rollen (50) der Rollenanordnung (48) in Rotation zu setzen.

6. Vorrichtung nach Anspruch 5,
**dadurch gekennzeichnet,**
**dass** die Rollenanordnung (48) fest auf der Ebene zum Stapelabführbereich (22) angeordnet ist, so dass die Stapelfläche (46) relativ zur Rollenanordnung (48) bewegbar ist, oder mindestens eine Aufnahmevorrichtung (40,41) weist die Rollenanordnung (48) auf, die mit der Stapelfläche (46) bewegbar ist.

7. Vorrichtung nach Anspruch 5 oder 6,
**dadurch gekennzeichnet,**
**dass** die Aufnahmevorrichtung (40,41) derart ausgestaltet ist, dass die Stapelfläche (46) in die Rollenanordnung (48) eintauchbar ist.

8. Vorrichtung nach einem der vorhergehenden Ansprüche,
**dadurch gekennzeichnet,**
**dass** außerhalb des Palettierbereiches (10) eine Leerpalettenaufnahme (51) vorgesehen ist, in der Leerpaletten (1) stapelbar sind, wobei eine Leerpalettenzuführung auf der Ebene des Stapelabführbereiches (22) oder auf der Ebene des Palettierbereiches (10) oder zwischen der Ebene des Stapelabführbereiches (22) und der Ebene des Palettierbereiches (10) erfolgt, und/oder dass die Aufnahmevorrichtung (40,41) derart steuerbar ist, dass diese eine Leerpalette (6) außerhalb des Palettierbereiches (10) aufnimmt und in den Palettierbereich (10) befördert.

9. Vorrichtung nach einem der vorhergehenden Ansprüche,
**dadurch gekennzeichnet,**
**dass** die Auflagefläche (23a,23b) Ausrichtungselemente (52) aufweist, um im Palettierbereich (10) die Stapel (2) auszurichten, insbesondere dass die Ausrichtungselemente (52) an der Unterseite, die dem Palettierbereich (10) zugewandt ist, der Auflagefläche (23a,23b) angeordnet sind, und/oder dass die Ausrichtungselemente (52) einen Raum (53) begrenzen, in den die Aufnahmevorrichtung (40,41) einfahrbar ist.

10. Vorrichtung nach einem der vorhergehenden Ansprüche,
**dadurch gekennzeichnet,**
**dass** eine Elektronik (54) vorgesehen ist, die ein Heranfahren und/oder Kontaktieren der Aufnahmevorrichtung (40,41) an eine Palette (1), insbesondere im Palettierbereich (10) und/oder außerhalb des Palettierbereiches (10) steuert und/oder regelt und/oder dass die Elektronik (54) eine Eingabevorrichtung (55) aufweist, in der Betriebsparameter, insbesondere die die Geometrie der Palette (1) definieren, eingebbar sind.

11. Vorrichtung nach einem der vorhergehenden Ansprüche,
**dadurch gekennzeichnet,**
**dass** eine Sensorik (56) vorgesehen ist, um
- innerhalb des Palettierbereiches (10) die Unterseite der Palette (1) zu erkennen, und/oder
- innerhalb des Palettierbereiches (10) die Stapelhöhe zu erkennen, die durch die Stapel (2) bestimmt ist, die auf der Palette (1) liegen, und/oder
- innerhalb des Palettierbereiches (10) den Abstand zwischen der Unterseite der Auflagefläche (23a,23b) und der Palette (1) zu erkennen, und/oder
- außerhalb des Palettierbereiches (10) die Höhe des Leerpalettenstapels (6) zu erkennen, und/oder
- innerhalb oder außerhalb des Palettierbereiches (10) die Höhe der einzelnen Palette (1) zu erkennen.

12. Vorrichtung nach Anspruch 5,
**dadurch gekennzeichnet,**
**dass** die Rollenanordnung (48) aus dem Palettierbereich (10) bewegbar ist, und/oder dass beide Aufnahmevorrichtungen (40,41) mit jeweils einer Rollenanordnung (48) ausgeführt sind.

13. Vorrichtung nach einem der vorhergehenden Ansprüche,
**dadurch gekennzeichnet,**
**dass** die Aufnahmevorrichtung (40,41) eine Fixierungseinheit (36) für die Stapel (2) und/oder für den Stapelverbund (5) aufweist, wobei insbesondere
die Fixierungseinheit (36) zumindest teilweise zwischen den Rollen (34) eintauchbar ist.

14. Vorrichtung nach einem der vorhergehenden Ansprüche,
**dadurch gekennzeichnet,**
**dass** die Aufnahmevorrichtung (40,41) eine Ausrichtungseinheit (60) für die Palette (1) aufweist, wobei insbesondere
die Ausrichtungseinheit (60) zumindest teilweise zwischen den Rollen (34) eintauchbar ist.

15. Verfahren zum Palettieren von Stapeln (2), insbesondere von Säcken, Sackhalbzeugen, Schlauchabschnitten oder flachliegenden Säcken, mit
einem Palettierbereich (10), in dem die Stapel (2) auf eine Palette (1) beladen werden, einer Ladevorrichtung (20), die die Stapel (2) in den Palettierbereich (10) einbringt,
einem Stapelabführbereich (22), durch den die mit Stapeln (2) beladene Palette (1) abtransportiert wird,
mindestens zwei Aufnahmevorrichtungen (40,41), die unabhängig voneinander mit Stapeln (2) beladen werden, wobei mindestens eine Aufnahmevorrichtung (40,41) unabhängig von der anderen Aufnahmevorrichtung (40,41) in Richtung Stapelabführbereich (22) bewegt wird, wobei an den Aufnahmevorrichtungen (40,41) Antriebsmittel (47) derart wirken, dass die Aufnahmevorrichtungen (40,41) translatorisch und/oder rotatorisch bewegbar sind und/oder schwenkbar sind, **dadurch gekennzeichnet, dass** die Ladevorrichtung (20) mindestens eine Auflagefläche (23a,23b) aufweist, auf der eine Vielzahl an Stapel (2) positioniert werden, wobei die Auflagefläche (23a,23b) zwischen einer geschlossenen Position (3) und einer geöffneten Position (4) verfrbar ist, wobei in der geschlossenen Position (3) die Stapel (2) auf die Auflagefläche (23a,23b) gesetzt werden und nach dem Eintritt der geöffneten Position (4) die Stapel (2) im Stapelverbund (5) in den Palettierbereich (10) fallen.

16. Verfahren nach Anspruch 15,
**dadurch gekennzeichnet,**
**dass** die Aufnahmevorrichtungen (40,41) jeweils eine Stapelfläche (46) aufweisen, auf der im Palettierbereich (10) Stapel (2) gestapelt werden, wobei insbesondere die Aufnahmevorrichtungen (40,41) während ihrer Bewegung voneinander ausweichen.

17. Verfahren nach einem der vorhergehenden Ansprüche,
**dadurch gekennzeichnet,**
**dass** die Aufnahmevorrichtung (40,41) in Richtung Ladevorrichtung (20) oder zur entgegengesetzten Richtung bezogen auf die Ladevorrichtung (20) bewegt wird, so dass die vertikale Position der Aufnahmevorrichtung (40,41) veränderbar ist, wobei in einer unteren vertikalen Position der Aufnahmevorrichtung (40,41) die mit Stapeln (2) beladene Palette (1) in Richtung Stapelabführbereich (22) abtransportiert wird.

18. Verfahren nach einem der vorhergehenden Ansprüche,
**dadurch gekennzeichnet,**
**dass** eine erste Aufnahmevorrichtung (40,41) eine Stapelfläche (46a,46b) aufweist, der Stapel (2) von der Auflagefläche (23a,23b) zur Zwischenspeicherung von Stapeln (2) zugeführt werden, wobei insbesondere die Stapelfläche (46a,46b) derart ausgeführt ist, dass diese zwischen einer geschlossenen (3) und einer geöffneten Position (4) verfährt und/oder dass während der Zwischenspeicherung eine zweite Aufnahmevorrichtung (40,41) in Richtung Stapelabführbereich (22) verfährt und/oder in Richtung erste Aufnahmevorrichtung (40,41) verfährt.

19. Verfahren nach einem der vorhergehenden Ansprüche,
**dadurch gekennzeichnet,**
**dass** während der Bewegung von der geöffneten Position (4) in die geschlossene Position (3) der Auflagefläche (23a,23b) eine Ausrichtung der Stapel (2) im Palettierbereich (10) erfolgt, und/oder dass die Aufnahmevorrichtung (40,41) eine Palette (1) von einer Leerpalettenaufnahme (51), die außerhalb des Palettierbereiches (10) sich befindet, aufnimmt und in den Palettierbereich (10) befördert.

20. Verfahren nach einem der vorhergehenden Ansprüche,
**dadurch gekennzeichnet,**
**dass** eine erste Aufnahmevorrichtung (40,41) eine Vollbewegung ausübt, bei der die Stapelfläche (46a,46b) von einer oberen vertikalen Position, die der Ladevorrichtung (20) zugewandt ist, in eine untere vertikale Position verfährt, in der die Stapel (2) in Richtung Stapelabführbereich (22) transportiert werden, wobei die zweite Aufnahmevorrichtung (40,41) in der oberen vertikalen Position verbleibt und/oder lediglich eine Teilhubbewegung im Bereich der oberen vertikalen Position ausübt.

21. Verfahren nach einem der vorhergehenden Ansprüche,
**dadurch gekennzeichnet,**
**dass** in einer oberen vertikalen Lage der Aufnahmevorrichtung (40,41) die Stapelfläche (46) mit Stapeln (2) beladen wird, und/oder dass zumindest eine Aufnahmevorrichtung (40,41) in den Palettierbereich (10) und/oder aus den Palettierbereich (10) translatorisch bewegt und/oder rotatorisch bewegt und/oder verschwenkt wird.

22. Verfahren nach einem der vorhergehenden Ansprüche,
**dadurch gekennzeichnet,**
**dass** eine Aufnahmevorrichtung (40,41) in einer oberen vertikalen Lage sich befindet, in der die auf der Aufnahmevorrichtung (40,41) sich befindende Palette (1) durch die Ladevorrichtung (20) beladen wird und die andere Aufnahmevorrichtung (40,41) in einer unteren vertikalen Lage sich befindet, wobei die sich auf dieser anderen Aufnahmevorrichtung (40,41) befindende Palette (1) abtransportiert wird.

23. Verfahren nach einem der Patentansprüche 15 bis 22 zum Betreiben einer Vorrichtung gemäß einem der Ansprüche 1 bis 14.

## Claims

1. A device for palletizing stacks (2), in particular of sacks, semi-finished sack products, sections of hose or sacks that lie flat, which device comprises the following features:
A palletizing region (10), which is provided for a loading at least one pallet (1) with stacks (2),
at least one loading device (20), with which stacks (2) can be brought into the palletizing region (10),
at least one stack feed region (21) for feeding stacks (2) into the loading device (20),
at least one stack removal region (22) for transporting away the pallets (1) loaded with stacks (2),
at least two receiving devices (40, 41), in order to be loaded with stacks (2) in the palletizing region (10), wherein at least one receiving device (40, 41) can be moved independently of the other receiving device (40, 41) in the direction of the stack removal region (22), wherein drive means (47) act on the receiving devices (40, 41) in such a manner that the receiving devices (40, 41) can be moved translationally and/or rotationally and/or are pivotable, **characterized in that** the loading device (20) has at least one bearing surface (23a, 23b), on which a plurality of stacks (2) can be positioned, wherein the bearing surface (23a, 23b) can be moved between a closed position (3) and an open position (4), wherein the closed position (3) is provided for feeding the stacks (2) into the loading device (20) and the open position (4) is provided for loading the palletizing region (10) with stacks (2) in a stacked assemblage (5).

2. The device according to Claim 1,
**characterized in**
**that** the receiving devices (40, 41) are movably arranged in such a manner that a transporting away of the stacks (2), which are located on a first receiving device (40, 41), through the stack removal region (22) and a loading of the second receiving device (40, 41) with stacks (2) can be carried out at the same time, wherein in particular both receiving devices (40, 41) are in each case designed with a stacking surface (46), on which the stacks (2) can be positioned.

3. The device according to any one of Claims 1 or 2,
**characterized in**
**that** the first receiving device (40) has a stacking surface (46a, 46b), for the intermediate storage of stacks (2), which can be fed from the bearing surface (23a, 23b) in the direction of the stacking surfaces (46a, 46b), wherein, in particular, the stacking surfaces (46a, 46b) are designed in such a manner that said stacking surfaces can be moved between a closed (3) and an open position (4) .

4. The device according to any one of the preceding claims,
**characterized in**
**that** at least one receiving device (40, 41) can be moved vertically in the direction of the loading device (20) and/or in the opposite direction with respect to the loading device (20) and/or that at least one receiving device (40, 41) can be moved in the horizontal direction into the palletizing region (10) and/or out of the palletizing region (10).

5. The device according to any one of the preceding claims,
**characterized in**
**that** at least one receiving device (40, 41) has a roller assembly (48), on which the pallet (1) can be placed, wherein the roller assembly (48) serves for the transport and/or for the movement of the pallet (1), wherein in particular a drive (49) is provided, which is in operative connection with the roller assembly (48), in order to set the rollers (50) of the roller assembly (48) into rotation.

6. The device according to Claim 5,
**characterized in**
**that** the roller assembly (48) is arranged fixedly on the plane with respect to the stack removal region (22), so that the stacking surface (46) can be moved relative to the roller assembly (48), or at least one receiving device (40, 41) has the roller assembly (48), which can be moved with the stacking surface (46).

7. The device according to Claim 5 or 6,
**characterized in**
**that** the receiving device (40, 41) is designed in such a manner that the stacking surface (46) is immersible in the roller assembly (48).

8. The device according to any one of the preceding claims,
**characterized in**
**that** outside the palletizing region (10) an empty pallet receiver (51) is provided, in which empty pallets (1) can be stacked, wherein an empty pallet feeding occurs on the plane of the stack removal region (22) or on the plane of the palletizing region (10) or between the plane of the stack removal region (22) and the plane of the palletizing region (10), and/or that the receiving device (40, 41) can be controlled in such a manner that the latter receives an empty pallet (6) outside the palletizing region (10) and conveys it to the palletizing region (10).

9. The device according to any one of the preceding claims,
**characterized in**
**that** the bearing surface (23a, 23b) has alignment elements (52), in order to align the stacks (2) in the palletizing region (10), in particular, that the alignment elements (52) are arranged on the underside of the bearing surface (23a, 23b) which is facing the palletizing region (10), and/or that the alignment elements (52) delimit a space (53), into which the receiving device (40, 41) can be introduced.

10. The device according to any one of the preceding claims,
**characterized in**
**that** an electronic system (54) is provided, which controls and/or regulates an approach and/or a contact of the receiving device (40, 41) to a pallet (1), in particular in the palletizing region (10) and/or outside the palletizing region (10) and/or that the electronic system (54) has an input device (55), in which operating parameters, in particular, which define the geometry of the pallet (1) can be input.

11. The device according to any one of the preceding claims,
**characterized in**
**that** a sensor system (56) is provided, in order
- to detect the underside of the pallet (1) within the palletizing region (10), and/or
- to detect the stack height within the palletizing region (10), which is determined by the stacks (2), which lie on the pallet (1), and/or
- to detect the distance between the underside of the bearing surface (23a, 23b) and the pallet (1) within the palletizing region (10), and/or
- to detect the height of the empty pallet stack (6) outside the palletizing region (10), and/or
- to detect the height of the individual pallet (1) within or outside the palletizing region (10).

12. The device according to Claim 5,
**characterized in**
**that** the roller assembly (48) can be moved out of the palletizing region (10), and/or that both receiving devices (40, 41) are designed with, in each case, a roller assembly (48).

13. The device according to any one of the preceding claims,
**characterized in**
**that** the receiving device (40, 41) has a fixing unit (36) for the stack (2) and/or for the stack assemblage (5), wherein in particular the fixing unit (36) is at least partially immersible between the rollers (34).

14. The device according to any one of the preceding claims,
**characterized in**
**that** the receiving device (40, 41) has an alignment unit (60) for the pallet (1), wherein in particular the alignment unit (60) is at least partially immersible between the rollers (34).

15. A method for palletizing stacks (2), in particular, of sacks, semi-finished sack products, sections of hose or sacks that lie flat, with
a palletizing region (10), in which the stacks (2) are loaded on a pallet (1),
a loading device (20), which brings the stacks (2) into the palletizing region (10),
a stack removal region (22), through which the pallet (1) loaded with stacks (2) is transported away,
at least two receiving devices (40, 41), which are loaded with stacks (2) independently of one another, wherein at least one receiving device (40, 41) is moved independently of the other receiving device (40, 41) in the direction of the stack removal region (22), wherein drive means (47) act on the receiving devices (40, 41) in such a manner that the receiving devices (40, 41) can be moved translationally and/or rotationally and/or are pivotable, **characterized in that** the loading device (20) has at least one bearing surface (23a, 23b), on which a plurality of stacks (2) are positioned, wherein the bearing surface (23a, 23b) can be moved between a closed position (3) and an open position (4), wherein in the closed position (3) the stacks (2) are placed on the bearing surface (23a, 23b) and after entering the closed position (4) the stacks (2) in the stack assemblage (5) fall into the palletizing region (10).

16. The method according to Claim 15,
**characterized in**
**that** the receiving devices (40, 41) in each case have a stacking surface (46), on which stacks (2) are stacked in the palletizing region (10), wherein in particular the receiving devices (40, 41) avoid one another during their movement.

17. The method according to any one of the preceding claims,
**characterized in**
**that** the receiving device (40, 41) is moved in the direction of the loading device (20) or in the opposite direction with respect to the loading device (20), so that the vertical position of the receiving device (40, 41) can be changed, wherein in a lower vertical position of the receiving device (40, 41) the pallet (1) loaded with stacks (2) can be transported away in the direction of the stack removal region (22).

18. The method according to any one of the preceding claims,
**characterized in**
**that** a first receiving device (40, 41) has a stacking surface (46a, 46b), to which stacks (2) are fed from the bearing surface (23a, 23b) for the intermediate storage of stacks (2), wherein in particular the stacking surface (46a, 46b) is designed in such a manner that the said stacking surface is moved between a closed (3) and an open position (4) and/or that during the intermediate storage a second receiving device (40, 41) moves in the direction of the stack removal region (22) and/or moves in the direction of the first receiving device (40, 41).

19. The method according to any one of the preceding claims,
**characterized in**
**that** during the movement from the open position (4) into the closed position (3) of the bearing surface (23a, 23b) an alignment of the stacks (2) takes place in the palletizing region (10), and/or that the receiving device (40, 41) receives a pallet (1) from an empty pallet receiver (51), which is located outside the palletizing region (10) and conveys it into the palletizing region (10).

20. The method according to any one of the preceding claims,
**characterized in**
**that** a first receiving device (40, 41) performs a full movement, in which the stacking surface (16a, 46b) moves from an upper vertical position, which is facing the loading device (20), into a lower vertical position, in which the stacks (2) are transported in the direction of the stack removal region (22), wherein the second receiving device (40, 41) remains in the upper vertical position and/or only performs a partial lifting motion in the region of the upper vertical position.

21. The method according to any one of the preceding claims,
**characterized in**
**that** in an upper vertical position of the receiving device (40, 41) the stacking surface (16) is loaded with stacks (2), and/or that at least one receiving device (40, 41) is moved translationally and/or is moved rotationally and/or is pivoted into the palletizing region (10) and/or out of the palletizing region (10).

22. The method according to any one of the preceding claims,
**characterized**
**in that** a receiving device (40, 41) is located in an upper vertical position, in which the pallet (1) located on the receiving device is loaded by the loading device (20) and the other receiving device (40, 41) is located in a lower vertical position, wherein the pallet (1) located on this other receiving device (40, 41) is transported away.

23. The method according to any one of patent claims 15 to 22 for operating a device according to any one of Claims 1 to 14.

## Revendications

1. Dispositif de palettisation de piles (2), plus particulièrement de sacs, de sacs semi-finis, de portions de gaines ou de sacs plats, qui présente les caractéristiques suivantes :
une zone de palettisation (10) qui est prévue pour un chargement d'au moins une palette (1) avec des piles (2),
au moins un dispositif de chargement (20) avec lequel les piles (2) peuvent être amenées dans la zone de palettisation (10),
au moins une zone d'introduction de piles (21) pour l'introduction de piles (2) dans le dispositif de chargement (20),
au moins une zone d'évacuation de piles (22) pour l'évacuation de la palette (1) chargée avec les piles (2),
au moins deux dispositifs de prise en charge (40, 41) destinés à être chargés dans la zone de palettisation (10) avec des piles (2), au moins un dispositif de prise en charge (40, 41) pouvant être déplacé indépendamment de l'autre dispositif de prise en charge (40, 41) en direction de la zone d'évacuation des piles (22), moyennant quoi, sur les dispositifs de prise en charge (40, 41) agissent des moyens d'entraînement (47) de façon à ce que les dispositifs de prise en charge (40, 41) puissent être déplacés en translation et/ou en rotation e/ou puissent être pivotés, **caractérisé en ce que** le dispositif de chargement (20) comprend au moins une surface d'appui (23a, 23b) sur laquelle une pluralité de piles (2) peuvent être positionnées, la surface d'appui (23a, 23b) pouvant être déplacée entre une position fermée (3) et une position ouverte (4), la position fermée (3) étant prévue pour l'introduction des piles (2) dans le dispositif de chargement (20) et la position ouverte (4) étant prévue pour le chargement de la zone de palettisation (10) avec des piles (2) dans un ensemble de piles (5).

2. Dispositif selon la revendication 1, **caractérisé en ce que** les dispositifs de prise en charge (40, 41) sont disposés de manière mobile de façon à ce que, simultanément, un évacuation des piles (2) qui se trouvent sur un premier dispositif de prise en charge (40, 41) à travers la zone d'évacuation des piles (22) et un chargement du deuxième dispositif de prise en charge (40, 41) avec des piles (2) puissent être effectués, moyennant quoi, plus particulièrement, les deux dispositifs de prise en charge (40, 41) sont réalisés chacun avec une surface d'empilement (46) sur laquelle les piles (2) peuvent être positionnées.

3. Dispositif selon l'une des revendications 1 ou 2, **caractérisé en ce que** le premier dispositif de prise en charge (40) comprend une surface d'empilement (46a, 46b) pour l'entreposage de piles (2) qui peuvent être introduites par la surface d'appui (23a, 23b) en direction de la surface d'empilement (46a, 46b), moyennant quoi, plus particulièrement, la surface d'empilement (46a, 46b) est réalisée de façon à pouvoir être déplacée entre une position fermée (3) et une position ouverte (4).

4. Dispositif selon l'une des revendications précédentes, **caractérisé en ce qu'**au moins un dispositif de prise en charge (40, 41) peut être déplacé verticalement en direction du dispositif de chargement (20) et/ou dans la direction opposée par rapport au dispositif de chargement (20) et/ou **en ce qu'**au moins un dispositif de prise en charge (40, 41) peut être déplacé dans la direction horizontale vers la zone de palettisation (10) et/ou hors de la zone de palettisation (10).

5. Dispositif selon l'une des revendications précédentes, **caractérisé en ce qu'**au moins un dispositif de prise en charge (40, 41) comprend une disposition de rouleaux (48) sur laquelle la palette (1) peut être posée, la disposition de rouleaux (48) servant au transport et/ou au déplacement de la palette (1), moyennant quoi, plus particulièrement, un entraînement (49) est prévu, qui est en liaison fonctionnelle avec la disposition de rouleaux (48), pour mettre en rotation les rouleaux (50) de la disposition de rouleaux (48).

6. Dispositif selon la revendication 5, **caractérisé en ce que** la disposition de rouleaux (48) est disposée de manière fixe sur le plan par rapport à la zone d'évacuation des piles (22), de façon à ce que la surface d'empilement (46) puisse être déplacée par rapport à la disposition de rouleaux (48) ou au moins un dispositif de prise en charge (40, 41) comprend la disposition de rouleaux (48) qui peut être déplacée avec la surface d'empilement (46).

7. Dispositif selon la revendication 5 ou 6, **caractérisé en ce que** le dispositif de prise en charge (40, 41) est conçu de façon à ce que la surface d'empilement (46) puisse être plongée dans la disposition de rouleaux (48).

8. Dispositif selon l'une des revendications précédentes, **caractérisé en ce que**, à l'extérieur de la zone de palettisation (10), est prévu un logement pour palettes vides (51), dans laquelle des palettes vides (1) peuvent être empilées, une alimentation en palettes vides étant effectuée sur le plan de la zone d'évacuation des piles (22) ou sur le plan de la zone de palettisation (10) ou entre le plan de la zone d'évacuation des piles (22) et le plan de la zone de palettisation (10), et/ou **en ce que** le dispositif de prise en charge (40, 41) peut être contrôlé de façon à prendre en charge cette palette vide (6) et la convoie vers la zone de palettisation (10).

9. Dispositif selon l'une des revendications précédentes, **caractérisé en ce que** la surface d'appui (23a, 23b) comprend des éléments d'alignement (52) afin d'aligner les piles (2) dans la zone de palettisation (10), plus particulièrement **en ce que** les éléments d'alignement (52) sont disposés sur le côté inférieure, orienté vers la zone de palettisation (10), de la surface d'appui (23a, 23b) et/ou **en ce que** les éléments d'alignement (52) délimitent un espace (53) dans lequel le dispositif de prise en charge (40, 41) peut être rentré.

10. Dispositif selon l'une des revendications précédentes, **caractérisé en ce qu'**une électronique (54) est prévue, qui contrôle et/ou régule une approche et/ou une mise en contact du dispositif de prise en charge (40, 41) avec une palette (1), plus particulièrement dans la zone de palettisation (10) et/ou à l'extérieur de la zone de palettisation (10) et/ou **en ce que** l'électronique (54) comprend un dispositif d'entrée (55) dans laquelle des paramètres de fonctionnement, qui définissent plus particulièrement la géométrie de la palette (1), peuvent être entrés.

11. Dispositif selon l'une des revendications précédentes, **caractérisé en ce que** des capteurs (56) sont prévus, afin
- de détecter, à l'intérieur de la zone de palettisation (10), le côté inférieure de la palette (1) et/ou
- de détecter, à l'intérieur de la zone de palettisation (10), la hauteur de la palette , qui est déterminée par les piles (2) qui se trouvent sur la palette (1) et/ou
- de détecter, à l'intérieur de la zone de palettisation (10), la distance entre le côté inférieure de la surface d'appui (23a, 23b) et la palette (1) et/ou
- de détecter, à l'extérieur de la zone de palettisation (10), la hauteur de la pile de palettes vides (6) et/ou
- de détecter, à l'intérieur ou à l'extérieur de la zone de palettisation (10), la hauteur des différentes palettes (1).

12. Dispositif selon la revendication 5, **caractérisé en ce que** la disposition de rouleaux (48) peut être déplacée hors de la zone de palettisation (10) et/ou **en ce que** les deux dispositifs de prise en charge (40, 41) sont réalisés chacun avec une disposition de rouleaux (48).

13. Dispositif selon l'une des revendications précédentes, **caractérisé en ce que** le dispositif de prise en charge (40, 41) comprend une unité de fixation (36) pour les piles (2) et/ou pour l'ensemble de piles (5), moyennant quoi, plus particulièrement, l'unité de fixation (36) peut être plongée au moins partiellement entre les rouleaux (34).

14. Dispositif selon l'une des revendications précédentes, **caractérisé en ce que** le dispositif de prise en charge (40, 41) comprend une unité d'alignement (60) pour la palette (1), moyennant quoi, plus particulièrement, l'unité d'alignement (60) peut être plongée au moins partiellement entre les rouleaux (34).

15. Procédé de palettisation de piles (2) plus particulièrement de sacs, de sacs semi-finis, de portions de gaines ou de sacs plats, avec une zone de palettisation (10), dans laquelle les piles (2) sont chargées sur une palette (1), un dispositif de chargement (20) qui amène les piles (2) dans la zone de palettisation (10), une zone d'évacuation des piles (22) à travers laquelle la palette (1) chargée de piles (2) est évacuée,
au moins deux dispositifs de prise en charge (40, 41) qui sont chargés indépendamment entre eux avec des piles (2), au moins un dispositif de prise en charge (40, 41) étant déplacé indépendamment de l'autre dispositif de prise en charge (40, 41) en direction de la zone d'évacuation des piles, moyennant quoi, sur les dispositifs de prise en charge (40, 41), agissent des moyens d'entraînement (47) de façon à ce que les dispositifs de prise en charge (40, 41) puissent être déplacés en translation et/ou en rotation et/ou puissent être pivotés, **caractérisé en ce que** le dispositif de chargement (20) comprend au moins une surface d'appui (23a, 23b) sur laquelle une pluralité de piles (2) sont positionnées, la surface d'appui (23a, 23b) pouvant être déplacée entre une position fermée (3) et une position ouverte (4), moyennant quoi, dans la position fermée (3), les piles (2) sont posées sur la surface d'appui (23a, 23b) et, après l'arrivée de la position fermée (4), les piles (2) tombent dans l'ensemble de piles (5) dans la zone de palettisation (10).

16. Procédé selon la revendication 15, **caractérisé en ce que** les dispositifs de prise en charge (40, 41) comprennent chacun une surface d'empilement (46) sur laquelle des piles (2) sont empilées dans la zone de palettisation (10), moyennant quoi, plus particulièrement les dispositifs de prise en charge (40, 41) s'écartant l'un de l'autre pendant leur déplacement.

17. Procédé selon l'une des revendications précédentes, **caractérisé en ce que** le dispositif de prise en charge (40, 41) est déplacé en direction du dispositif de chargement (20) ou dans la direction opposée par rapport au dispositif de chargement (20), de façon à ce que la position verticale du dispositif de prise en charge (40, 41) puisse être modifiée, moyennant quoi, dans une position verticale inférieure du dispositif de pris en charge (40, 41), la palette (1) chargée de piles (2) est évacuée en direction de la zone d'évacuation des piles (22).

18. Procédé selon l'une des revendications précédentes, **caractérisé en ce qu'**un premier dispositif de prise en charge (40, 41) comprend une surface d'empilement (46a, 46b) sur laquelle les piles (2) sont introduites de la surface d'appui (23a, 23b) pour l'entreposage des piles (2), moyennant quoi, plus particulièrement la surface d'empilement (46a, 46b) est conçue de façon à se déplacer entre une position fermée (3) et une position ouverte (4) et/ou de façon à ce que, pendant l'entreposage, un deuxième dispositif de prise en charge (40, 41) se déplace en direction de la zone d'évacuation des piles (22) et/ou se déplace en direction du premier dispositif de prise en charge (40, 41).

19. Procédé selon l'une des revendications précédentes, **caractérisé en ce que**, pendant le déplacement de la position ouverte (4) vers la position fermée (3) de la surface d'appui (23a, 23b), un alignement des piles (2) a lieu dans la zone de palettisation (10) et/ou **en ce que** le dispositif de prise en charge (40, 41) prend en charge une palette (1) à partir d'un logement de palette vide (51), qui se trouve à l'extérieur de la zone de palettisation (10), et la convoie vers la zone de palettisation (10).

20. Procédé selon l'une des revendications précédentes, **caractérisé en ce qu'**un premier dispositif de prise en charge (40, 41) effectue un déplacement complet lors duquel la surface d'empilement (46a, 46b) se déplacement d'une position verticale supérieure, orientée vers le dispositif de chargement (20), vers une position verticale inférieure dans laquelle les piles (2) sont transportées en direction de la zone d'évacuation des piles (22), le deuxième dispositif de prise en charge (40, 41) restant dans la position verticale supérieure et/ou effectuant seulement une course partielle au niveau de la position verticale supérieure.

21. Procédé selon l'une des revendications précédentes, **caractérisé en ce que**, dans une position verticale supérieure du dispositif de prise en charge (40, 41), la surface d'empilement (46) est chargée avec des piles (2) et/ou **en ce qu'**au moins un dispositif de prise en charge (40, 41) est déplacé en translation et/ou en rotation et/ou est pivoté vers la zone de palettisation (10) et/ou hors de la zone de palettisation (10).

22. Procédé selon l'une des revendications précédentes, **caractérisé en ce qu'**un dispositif de prise en charge (40, 41) se trouve dans une position verticale supérieure dans laquelle la palette (1) se trouvant sur le dispositif de prise en charge (40, 41) est chargée par le dispositif de chargement (20) et l'autre dispositif de prise en charge (40, 41) se trouve dans une position verticale inférieure, la palette (1) se trouvant sur cet autre dispositif de prise en charge (40, 41) étant évacuée.

23. Procédé selon l'une des revendications 15 à 22 pour l'exploitation d'un dispositif selon l'une des revendications 1 à 14.
